# EUROPEAN PATENT SPECIFICATION

(11) **EP 0 974 223 B1**
(45) Date of publication and mention of the grant of the patent: **28.01.2009**
(21) Application number: 98910429.4
(22) Date of filing: 16.03.1998
(51) Int. Cl.: H04N 1/00, H04N 7/14, H04N 7/173, H04N 5/00

(54) **SYSTEM AND METHOD FOR SUPPLYING SUPPLEMENTAL AUDIO INFORMATION FOR VIDEO PROGRAMS**
VORRICHTUNG UND VERFAHREN ZUR LIEFERUNG VON ZUSATZLICHEN TONINFORMATIONEN FÜR VIDEOPROGRAMME
SYSTEME ET PROCEDE DE FOURNITURE D'INFORMATIONS AUDIO SUPPLEMENTAIRES POUR DES PROGRAMMES VIDEO

(30) Priority: 21.03.1997 US 821436; 03.07.1997 US 886006
(43) Date of publication of application: 26.01.2000
(73) Proprietor: Walker Digital, LLC, Stamford, CT 09605 (US)
(72) Inventor: WALKER, Jay, S., Ridgefield, CT 06877 (US); JORASCH, James, A., Stamford, CT 06901 (US); SPARICO, Thomas, M., Riverside, CT 06878 (US); LECH, Robert, R., Norwalk, CT 06851 (US)
(74) Representative: Maggs, Michael Norman
(86) International application number: PCT/US1998/005112
(87) International publication number: WO 1998/043406

(56) References cited:
- US-A- 5 410 343
- US-A- 5 438 355
- US-A- 5 559 949
- US-A- 5 570 295

## Description

### BACKGROUND OF THE INVENTION

This invention relates to the field of video and broadcast television programs. More particularly, the present invention provides a system and a method for television viewers to receive additional dialog and information, via a selected interface, related to characters on a specific broadcast television program and to receive supplemental information that is synchronized to the action and events of a video program.

Many television (TV) programs, such as daytime soap operas and situation comedies, are regularly watched by large audiences. Considering the growing number of TV sets in homes and the amount of time the average person spends watching TV, the size of the audience is expected to increase over time. Correspondingly, programs need to change and evolve to suit the ever-more diverse tastes and interests of this expanding audience.

Television networks, cable companies and independent TV program providers offer a myriad of TV program categories to capture the interest of viewers. These TV program categories include, for example, game shows, talk shows, situation comedies, sporting events, and soap operas. The ultimate goal is to provide interesting programming, in order to capture a large segment of the viewing audience.

One popular category of TV programming is the daytime soap opera. This type of program revolves around the day-to-day lives of characters featured within the program. A plot or story-line for a typical soap opera can span several episodes, possibly an entire TV season. Each episode continues and develops the story-line further, and also develops the personalities of characters within the soap opera in an ever-expanding and detailed manner.

Soap operas, as well as other TV programs, often develop a core group of passionate and dedicated viewers. Many viewers religiously watch every episode of their favorite TV programs -- loathing to miss even a single episode. With these viewers in mind, several magazines on the market summarize daily or weekly episodes of television programs for people who may have missed a particular episode. There are also 900 telephone numbers available that offer similar services for a fee. These are just two areas in which peripheral services have developed in response to TV viewer's demand.

Moreover, many TV viewers are extremely involved in their favorite TV program's story-line and characters. The writers of TV programs must weave complex and interesting plots to maintain the viewer's loyalty and interest in the program. In most instances, multi-faceted and well-developed characters are essential to the popularity (and longevity) of the program. Thus, a typical script for a TV program may be written, revised and edited numerous times to ensure that the result is interesting, realistic, believable or humorous.

Writers and producers spend a great deal of time developing characters and story-lines for TV programs that ultimately are not used in the broadcast version of the TV program. Many times several scripts, each with different plot twists and dialogue, are developed for each TV program episode. This is occasionally done to preserve the secrecy of the final broadcast episode.

However, more often than not, these changes and alternate scripts are never broadcasted. Thus, the TV program producers and developers have no outlet to display this additional work-product (or by-product, as the case may be) to the viewing public.

To a certain extent, dedicated viewers of, for example, a soap opera, live vicariously through the trials and tribulations of the TV characters. Any additional information on their favorite TV program is of interest to these viewers, particularly, the thoughts, feelings and motivations that help define the TV characters.

However, the typical TV program format makes it difficult to develop the thoughts and feelings for a TV character in great detail. The story-line in a TV program must flow in a relatively quick and fluid manner. Unlike a novel, where an author can, between exchanges of dialogue, devote extensive time to a given character's thoughts, motivations, and considerations, the dialogue in TV programs must flow in a real-time manner. In many situations, this means that the writers must briefly summarize the thoughts or motivations of a character to keep the action flowing smoothly.

For example, a soap opera might have the lead female character saying to the lead male character: "I am going to New York for lunch. Would you like to join me?" However, her thoughts, which are not being broadcasted, may have her contemplating several devious things she is considering doing while in New York. These devious machinations may or may not occur depending upon the road the writers decide to follow for the story-line.

A wealth of non-broadcast material (from story-line changes and revisions) could be created and used to supplement the audio tracks of TV programs. In the example discussed above, a parallel audio track could be used to provide the additional thoughts of the lead female character to listeners who are simultaneously watching the TV broadcast.
In this regard, modern stereo televisions can receive a secondary audio channel (SAP). SAP technology has been used to provide descriptive video (DVS), which prints words on the television screen describing the action for the deaf. SAP has also been used to provide non-English audio tracks for the TV programs or sporting events, as well as a running commentary on TV movies. Some radio stations also broadcast audio tracks of live events (e.g. sporting events) or TV programs.

However, these conventional simulcasting systems provide everyone using the system with the same audio track; i.e., all viewers (or listeners) using these systems receive the same information. There is no way for a TV viewer to select individual information, for example, additional dialogue or thoughts of a particular character on a TV soap opera program. Moreover, these systems are typically provided for a monthly or annual service fee or are provided at no cost, because charging on a per-TV program or per-use basis is administratively difficult to process, or not possible at all.

Other systems have been developed using community antenna television facilities (CATV) that allow subscribers to interactively request still-television video frames with an accompanying audio message. However, the TV video and accompanying audio message provided by these systems are not related to, or synchronized to, broadcast TV programs.

Phone services (e.g. chat rooms and conference calling systems) also exist that allow callers to dial-in and listen to pre-recorded audio messages or even listen to live events in progress. When a caller uses a dial in service to listen to a sporting event, for example, which is being simultaneously broadcasted on TV, the radio audio track replaces the TV audio track. Thus, these services are not synchronized to the TV program's audio track and are not designed to supplement the dialogue for the TV program.

Until now, producers and broadcasters of TV programs have not been able to benefit from non-broadcast material developed in relation to a TV program's story-line or characters. Therefore, synchronized audio tracks providing supplemental information for TV programs have not been created. This supplemental audio information would be of great interest to devoted fans of TV programs. In addition, TV program broadcasters would have an alternative venue to bolster their TV program's characters, thereby creating even greater interest in the particular TV program. Accordingly, there is a need for a system that solves the above described problems. In particular, a system that permits TV producers to provide additional valuable entertainment content to interested viewers.

Additionally, many video cassette programs (e.g., rented movies) are regularly watched by large audiences. Considering the growing number of TV sets and video cassette recorders (VCR) in homes and the amount of time the average person spends watching TV, the size of the audience is expected to increase over time. Correspondingly, programs need to change and evolve to suit the ever-more diverse tastes and interests of this expanding audience.

In recent years, the Internet has received a great deal of attention. The Internet is a vast and expanding network of computers and other devices linked together by various media, enabling all the computers to exchange and share data. The Internet provides an enormous amount of information about a myriad of corporations, products and services, as well as educational, research and entertainment information. It is estimated that more than 30 million people worldwide now use the Internet with 100 million predicted to be on the "net" within a few years.

One way to establish a presence on the Internet is by placing a web site on a host operating a web server within a given domain name (e.g., "USPTO.gov"). A web site consists of one or more web pages, which are basically computer data files. A web page is identified by a unique Internet address commonly referred to as a Uniform Resource Locator ("URL"). When the web server receives an inquiry from the Internet, it returns the web page data to the computer making the inquiry. The web page may comprise multiple pages of information including messages, hyperlinks (i.e., automatic links that permit jumps from one web page to another), audio and graphical information, and combinations thereof.

In this regard, some advertisers and producers of television programs, movies and video programs have created web sites to promote and to provide additional information concerning their respective programs or projects. For example, an Internet user can access a web site related to his favorite TV show (e.g., "http://www.spe.sony.com/ pictures/tv/seinfeld.htm") to get an episode schedule, get more information about the TV show's characters and actors, and find out about upcoming special events. Web sices have also been created which allow Internet users to gather additional information about products or services that are advertised in television commercials.

Television advertisers having associated web sites often display the Internet address, or URL of an associated web site during television advertisements. With the URL, a prospective customer can access the advertiser's web site to receive additional information about the advertiser, the advertised product and/or related products.

As these web sites make clear, advertisers, producers and developers of video programs have the potential to provide the viewer with far more information than can be practically accommodated by conventional television or video cassette programs. For example, the typical TV program format makes it difficult to provide intricate details concerning the plot or characters within the program, because the story-line must flow in a relatively quick and fluid manner. Unlike a novel, where an author can devote extensive time to a given character, item, or event, the dialogue in TV programs must flow in a real-time manner. In many situations, this means that the writers must provide only a brief summary of a character, item or event to fit within the limitations of a television program and keep the action flowing smoothly.

In contrast to broadcast television or video cassette programs in which playing time is premium, a web site providing supplemental information is not so constrained. In this regard, a system known as HyperTV has been disclosed which enables television viewers to view web pages that are launched at the time of a broadcast television program. This system allows a viewer to select additional information related to a television program at the time of its original broadcast.

Another system, Intercast, has been developed which integrates content of a web page with a broadcast TV signal using the vertical blanking interval ("VBI") of the television signal. This system utilizes an undisplayed portion of the received signal to transmit data to a television receiver. Like HyperTV, this system enables a viewer to view the content of a web site related to the particular program at the time of the broadcast.

Although these systems provide additional content to a viewer of a broadcast television program, they have significant shortcomings. Presently, these systems provide additional information related to the television program, such as live chat lines, on-demand audio and video clips, and online shopping, but these systems fail to provide supplemental information synchronized with the action and events occurring within a particular video program.

In addition, the Intercast system requires sophisticated video decoding circuitry to extract transmitted data from the VBI. The Intercast system further requires circuitry to allow the user to interface with the television receiver and send viewer requests upstream to a service provider.

Further, both Intercast and HyperTV require the viewer to view the television program at the time of the original broadcast to receive synchronized information. A viewer wishing to time-shift his viewing of a television program, for example, using a VCR, cannot receive synchronized additional information from any of the prior art systems.

The failure of these system to provide synchronized supplemental information is a major disadvantage. To more fully enhance the viewer's experience, the supplemental information discussed above must be provided at the proper times to correspond with the action and events of the video program.

A wealth of non-broadcast material (or non-video-taped material) could be created and used to supplement conventional video programs. In the example discussed above, additional audio and visual tracks could be used to provide the supplemental information desired by the viewer. Although, this supplemental information must be synchronised to the action and events occurring in the video program so that the viewer can receive this information at the proper times.

US-A- 5,559,949 discloses those features set out in the preamble of the independent claims.

The system and method of the present invention are characterised by those features set out in the characterising portions of the independent claim.

### BRIEF DESCRIPTION OF THE DRAWINGS

FIG. 1 is a block diagram overview of one system constructed in accordance with the present invention.
FIG. 2 is a block diagram of the service controller of FIG. 1.
FIG. 3 is a table depicting the network database within the service controller of FIG. 2.
FIG. 4 is a table depicting the program database within the service controller of FIG. 2.
FIG. 5 is a table depicting the character database within the service controller of FIG. 2.
FIG. 6 is a table depicting the recording database within the service controller of FIG. 2.
FIG. 7 is a table depicting the billing database within the service controller of FIG. 2.
FIG. 8 is a flow chart of the operation of the system.
FIGS. 9a and 9b are flow charts of the operation of the service controller.
FIGS. 10a and 10b are flow charts depicting how the service controller processes information received from the IVRU.
FIG. 11 is a schematic block diagram overview of one system constructed in accordance with the present invention.
FIG. 12 is a schematic block diagram illustrating the program identification and synchronization information displayed during the video program.
FIG. 13 is a schematic block diagram illustrating the preferred integrated display device of the present invention.
FIG. 14 is a flow chart illustrating a preferred method of presenting supplemental information in accordance with the integrated display device of FIG. 13.
FIG. 15 is a table depicting the simulcast event database within the integrated display device of FIG. 13.

### DETAILED DESCRIPTION OF THE PREFERRED EMBODIMENTS

In a preferred embodiment of the present invention, writers for a TV program write supplemental dialogue for specific characters featured in the TV program. This supplemental dialogue consists of "thoughts" and "comments" not spoken aloud during the broadcast version of the TV program. For example, these thoughts could include a hidden agenda, a character's true feelings toward another character, or other motivational factors driving a character's actions. While many devoted fans are interested in this type of information, it is not easily conveyed to the viewing audience during the real-time exchange of dialogue between characters on the TV program.

In the present invention, audio recordings of these thoughts and comments are recorded using actors from the TV program. Of course, voice-doubles for the actors could also be used to make the audio recordings. The audio recordings are then edited and synchronized to the broadcast TV program. This process ensures that the additional thoughts and comments do not overlap the dialogue being spoken on the broadcast version audio track. These thoughts and comments are interspersed during the non-speaking periods and other appropriate periods in the TV program so that they can be listened to simultaneously with the TV program without conflict.

In alternative embodiments, the supplemental audio information can be used for other purposes. Several examples of other types of supplemental audio information for TV programs include: adult content and themes not available on the regular program, and multiple audio tracks of the same TV program, which provide different sets of audio information each time the TV program is viewed (and listened to). For example, each viewing could offer the hidden thoughts of a different character, or offer the viewer clues (e.g., hints concerning alternative actions or events that may or may not occur). This may give the viewer the sense that he is somehow participating in the show. Supplemental audio information can also be used to provide additional content, also referred to as "hyper-content," for news-type programs, consisting of information not included in the broadcast (e.g. an unabridged news report).

Traditional methods of broadcasting audio tracks, such as SAP or radio, are not suitable for the present application. The supplemental audio information must be made available only to customers requesting the service (i.e. not broadcasted to the world). In addition, there may be multiple versions of supplemental audio information for a particular TV program, so that different customers can choose different supplemental audio information for the same TV program, or watch the same TV program multiple times with different supplemental audio information each time. The supplemental audio information is synchronized with the audio track of the broadcast TV program - enhancing the audio track rather than merely replacing it.

In a further embodiment of the present invention, writers and developers of video programs prepare supplemental information related to TV show episodes, movies, video tape presentations, and the like. This supplemental information comprising additional audio, text, and visual information related to the video program is made available at an Internet web site accessible by the viewers of the video program. Viewers (i.e. customers) can simultaneously view the video program on a TV receiver, for example, and receive the supplemental information on their computer monitor display.

To illustrate the utility of the present invention consider a situation where the writers and/or director of a murder mystery television program might incorporate a 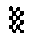 suicide note 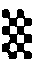 in a particular scene. Due to time constraints, they may be required to quickly flash or briefly summarize the "suicide note" to the viewing audience. If a viewer were able to, however, he may wish instead to slowly peruse the "suicide note" left by the victim. This might give the viewer additional insight into a character or event of the program, or provide additional entertainment by allowing the viewer to speculate as to future events in the program.

In another situation, a particular scene within a video or television program may have multiple characters involved in separate conversations, although, only one conversation can be showcased for the viewers at a time. However, rather than focusing on the particular conversation being showcased at that moment, a viewer may wish to eavesdrop on the other conversations or get a different visual perspective in order to get a better look at or understanding of other characters.

The present invention enables the producers of these video programs to offer a wide variety of additional information about the characters, story-lines and other aspects of their video program while being less hampered by the inherent constraints of a video program such as time, story development and continuity. A few of the possible forms of supplemental information that can be supplied to the viewing public are shown by the following

### examples:

Close-ups of specific items: As discussed above, a viewer may wish to slowly read and examine a "suicide note" left by a character in a murder mystery video program. Viewers of a medical drama may wish to view the medical records or test results, which are not shown to the viewers, of a patient being examined by a doctor on the show. Advertisers, sponsors and producers may provide close-ups of props along with related information, such as the history of the prop in the program or sales information related to purchasing the prop.

Alternative camera angles: This enables the viewer to focus on areas of the video program that are in the background or that are only quickly scanned in the video program. For example, during a legal drama, viewers may wish to focus on the defendant's or jury's reaction to certain evidence or testimony, rather than an overview camera angle of the courtroom.

Alternative scenes and dialogue: Viewers can enhance enjoyment of their favorite TV programs by following their favorite characters throughout the show. When, for example, that character leaves the scene co go to a new location, the viewer may elect to receive supplemental visual and audio information related to that character's action in the new location which is not seen by the conventional viewing public. Further, supplemental visual and audio information such as out-takes, edited scenes and alternative dialog may be provided to enhance the viewing experience.

Interactive games: Viewers may engage in games of skill and trivia related to the particular video program being viewed. For example, online tournaments may be conducted whereby viewers may compete against one another during a broadcast video program. It should be understood that the Internet (or commercial online service provider such as America Online) can provide a back channel allowing the web site to collect and evaluate viewers' answers to determine a winner. The tournament may include questions testing a viewer's knowledge of past programs, questions relating to events occurring during the current program or questions requiring a viewer to predict future events during the current program.

Other types of supplemental information: A running version of the video program's script may be available enabling a viewer to review the text of jokes or parts of dialogue that may have been missed. Mature content and themes not available on regular TV programs may be provided. Supplemental information can also be used to provide additional content, also referred to as "hyper-content," for news-type programs, consisting of information not included in the broadcast (e.g., an unabridged news report or background information). Such supplemental material may be made available specifically during commercial interruptions in the video program to extend the time constraints of the video program.

Supplemental information related to commercials or advertisements: Viewers can receive detailed information concerning the products or services being advertised within the video program. This may also include receiving answers to specific questions about the product, for example, where is the nearest dealer, car how much does a particular option cost. The viewers may also be able to receive coupons related to the products and services, as well as enter sweepstakes related to the advertisements. In addition, the synchronized web pages may provide links to other web pages (i.e. sponsor, producer or network) or links to real-time video stream commercials.

In the present invention, the supplemental information is edited and synchronized to the action and events of the video program. This process ensures that the supplemental information is available to the viewer at the proper times throughout the video program. For example, as discussed above, when a doctor in a video program is viewing a patient's medical records, this information is also made available to the viewer via the synchronized web site. Throughout the video program, the viewer receives supplemental images, audio, dialogue, scenes and information synchronized to the specific actions and events occurring within the video program. This is in contrast to conventional web sites related to TV shows, for example, which only provide general information and are not synchronized to the TV show, even if accessed while viewing the TV show.

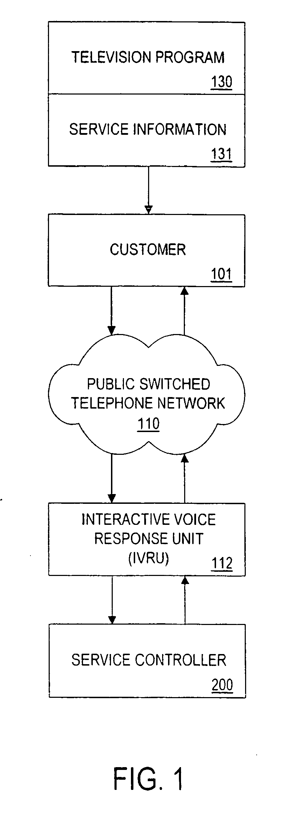

FIG. 1 shows an overall system block diagram of a preferred embodiment of the present invention. In this embodiment, a customer 101 receives service information 131, which is displayed discretely during the broadcast of a television program 130. The service information 131 comprises a 900 telephone number and a program identification code. The program identification code is a ten digit alphanumeric code comprising selection information and synchronization information (none of which are shown). The service information 131 is used by the customer 101 to request specific supplemental audio information related to the television program 130, as discussed below.

It is understood that the television program 130 is one of many television programs that are broadcasted or transmitted to the public. The television program 130 is received and displayed by conventional electronic equipment (i.e. a television set, not shown) located in close proximity to the customer 101. The electronic display equipment may receive the television program 130 through an antenna adapted to receive TV signals from a TV broadcast station, from a satellite transponder, a trunk cable from a CATV (i.e. cable TV) system, or from any other suitable transmission means.

The service information 131 is recorded on the same recording medium as the television program 130. For example, a television program can be recorded and then the service information 131 can be added during editing of the recorded television program. The service information 131 can also be added at the time of broadcasting the television program 130.

It is also understood that the service information 131 would be displayed even if the television program 130 is recorded on a recorded medium and played-back by the customer 101. While one customer 101 is depicted in FIG. 1 receiving the service information 131 from the television program 130, it is understood that the television program 130 is broadcasted to any number of customers simultaneously.

As illustrated in FIG 1., the customer 101, by utilizing his telephone (not shown), communicates through a public switch telephone network 110 (PSTN) and an interactive voice response unit, IVRU 112, to a service controller 200. The customer 101 provides the selection information and synchronization information, to the service controller 200. In response, the service controller 200 sends the supplemental audio information to the customer 101. The communication process via the telephone is discussed in detail below.

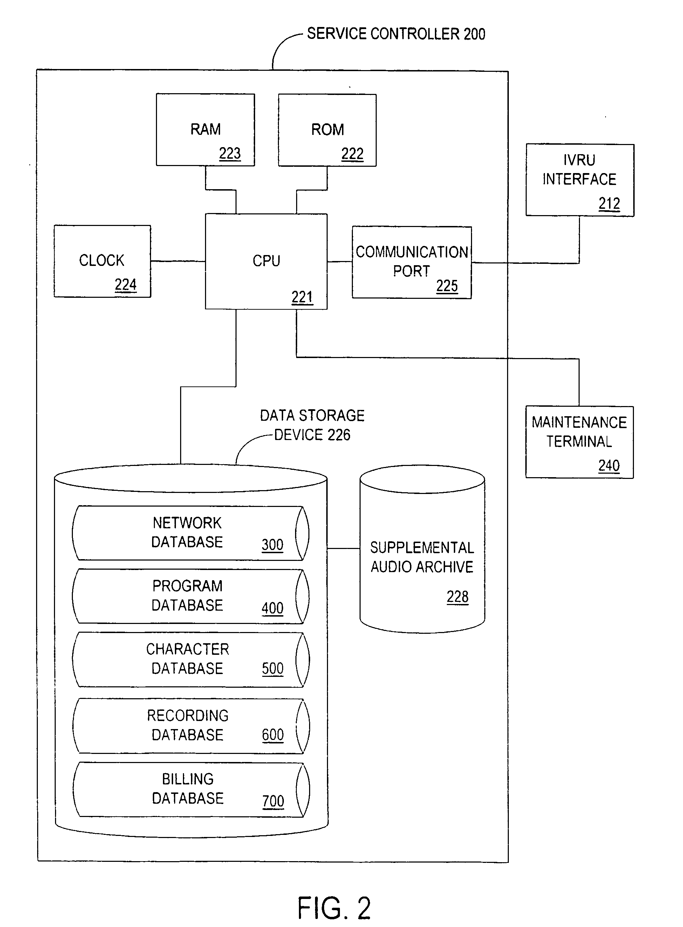

FIG. 2 is a block diagram of the preferred service controller 200. The service controller 200 includes a CPU 221 which performs the processing functions. The service controller 200 also includes a read only memory 222 (ROM) and a random access memory 223 (RAM). The ROM 222 is used to store at least some of the program instructions that are to be executed by the CPU 221, such as portions of the operating system or basic input-output system (BIOS), and the RAM 223 is used for temporary storage of data. A clock circuit 224 provides a clock signal which is required by the CPU 221.

The CPU 221 can also store information to, and read information from, a data storage device 226. The data storage device 226 includes a network database 300, a program database 400, a character database 500, a recording database 600, and a billing database 700.
These databases are described below. In addition, the data storage device 226 includes instructions (not shown) which can be read by and executed by the CPU 221, thereby enabling the CPU 221 to process requests. While FIG. 2 depicts separate databases, a single database that incorporates the functions of the databases mentioned above can also be used. Additional databases may be added as needed to store a variety of other information that may be required for other purposes.

The data storage device 226 also contains all the supplemental audio information recorded for each character, the supplemental audio archive 228 as described in more detail subsequently. Any of a wide variety of storage mediums are suitable for this purpose, including, for example, audio cassettes, digital audio tapes (DAT), laser discs, and the like.

In an alternative embodiment, the service controller 200 may have an external interface for inputting supplemental information, either live or pre-recorded. This supplemental information may include, for example, live audio information or even video information coupled with an audio component. The live audio information can include, for example, alternative color commentary for sporting events (e.g., Howard Stern, a popular radio disc jockey, providing supplemental color commentary on the Superbowl), or even specific athletes wearing microphones/transmitters during the sporting contest (e.g., a customer 101 could dial 1-900-RANGERS to hear what their favorite hockey player is saying during the game).

The service controller 200 also includes a communication port 225 connected to an inter-active voice response unit interface 212. The communication port 225 enables the CPU 221 to communicate with external devices. An IVRU 112, as shown in FIG. 1, is linked to the service controller 200 via the IVRU interface 212. The IVRU 112 is connected to the PSTN 110.

A plurality of telephone trunks (not shown) terminate at the IVRU 112 to allow multiple callers (i.e., customers) to call the IVRU 112 simultaneously. These telephone trunks may be analog or digital. The IVRU 112 may also terminate North American standard digital signal one (1.544 Mb/sec) facilities in a manner similar to a private-branch exchange (PBX).

The IVRU 112 allows the customer 101 to communicate with the service controller 200 using his or her telephone (not shown). Voice command prompts guide the customer 101 through various menu options allowing the customer 101 to communicate and obtain information from the service controller 200.

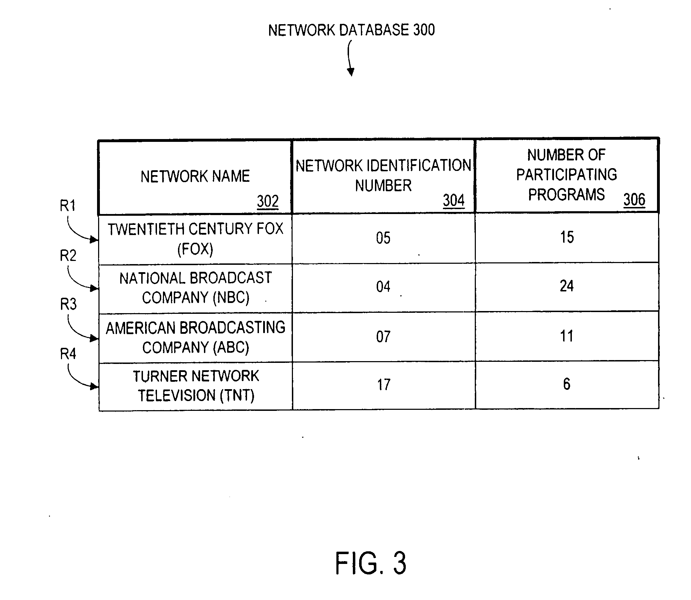

FIG. 3 is a pictorial representation depicting the information stored in the network database 300. The network database 300 comprises information related to each TV program provider or distributor associated with the present invention. The network database 300 includes a network name field 302, a network identification number field 304, and a number of participating programs field 306. The network identification number field 304 is a unique two digit code corresponding to each network or TV program provider. While only four records R1-R4 for four networks are depicted in FIG. 3, any number of records may be stored. It is also understood that independent and syndicated broadcast program providers may also be included in this database.

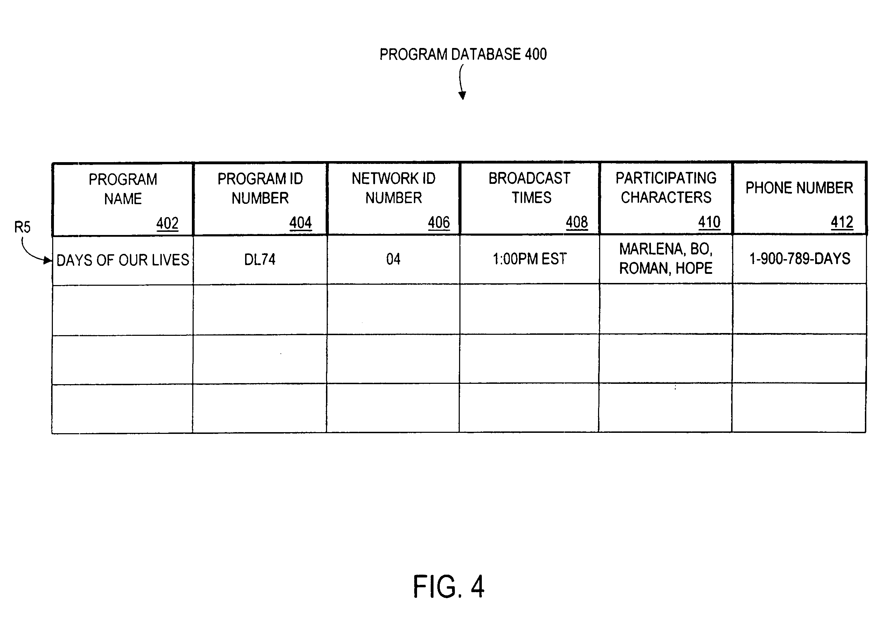

FIG. 4 is a pictorial representation of the content of the program database 400. The program database 400 comprises information related to each television program 130 for which supplemental information is available. The program database 400 includes a program name field 402, a program identification number field 404, a network identification number field 406 (corresponding to field 304 of the network database 300), a broadcast times field 408, a participating characters field 410, and a phone number field 412. The program identification number field 404 is a unique four digit code corresponding to each TV program. The participating characters field 410 contains the names of various characters for which supplemental audio information is available. The phone number field 41 includes a unique telephone number associated with each television program 130. This unique telephone number is dialed by the customer 101 to request supplemental audio information related to that particular television program 130. Other fields are described in greater detail below. Any number of records R5 may be stored in this database.

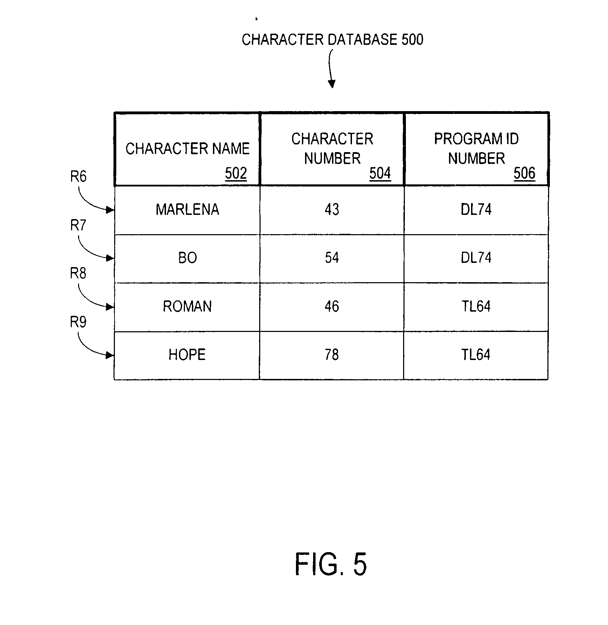

FIG. 5 is a pictorial representation of the layout and the information stored in the character database 500.
The character database 500 comprises information related to specific characters for which supplemental audio information is available. The character database 500 includes a character name field 502, a character number field 504, and a program identification number field 506 (corresponding to field 404 in program database 400). While only four records R6-R9 for four characters are depicted in FIG. 5, any number of records may be stored.

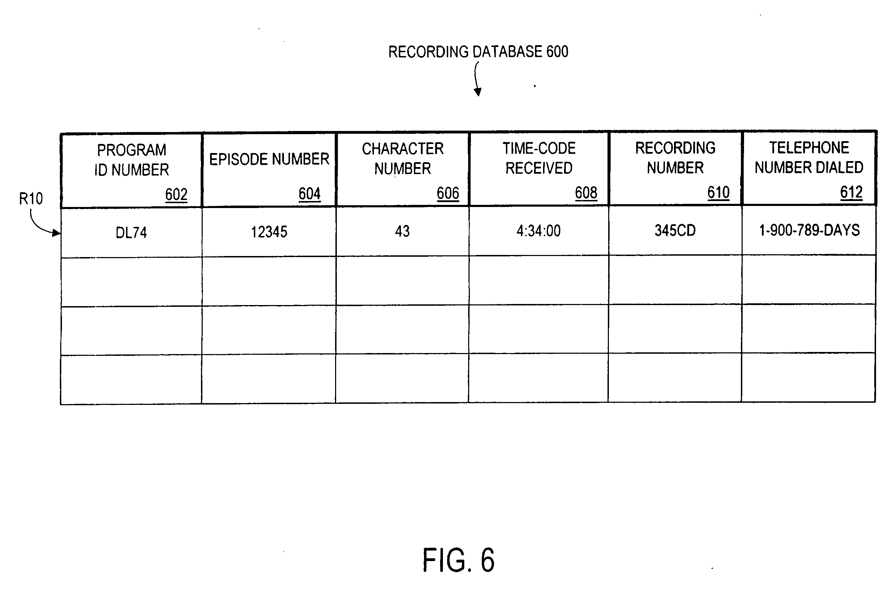

FIG. 6 is a pictorial representation of the layout of the recording database 600. The recording database 600 comprises information related to the supplemental audio information which may be provided to a particular customer 101. The recording database 600 includes a program identification number field 602 (corresponding to field 404 in the program database 400), an episode number field 604, a character number field 606 (corresponding to field 504 in the character database 500), a time-code received field 608, a recording number field 610, and a telephone number dialed field 612. The time-code received field 608 is discussed in more detail below.
Any number of records R10 may be stored in this database.

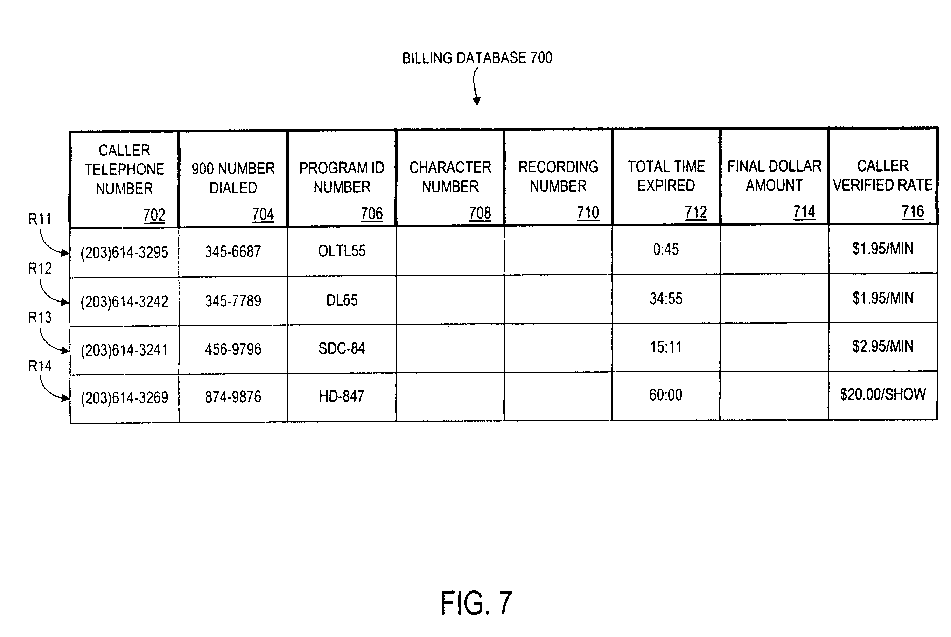

FIG. 7 is a pictorial representation of the layout and the information stored in the billing database 700. The billing database 700 includes a caller telephone number field 702, a 900 number dialed field 704, a program identification number field 706 (corresponding to field 404 in the program database 400), a character number field 708 (corresponding to character number field 504 in the character database 500), a recording number field 710 (corresponding to recording number field 610 in the recording database 600), a total time expired field 712, a final dollar amount 714, and a caller verified rate field 716. While only four records R11-R14 are depicted in FIG. 7, any number of records may be stored. To conserve storage space on the data storage device 226, records may be transferred to a different storage device or deleted after some predetermined time interval or after a predetermined event such as receipt of payment from the customer 101.

It is understood that the records and information stored within all the databases may be updated as needed, for example, when a new character is added or a show is deleted from the databases. This is accomplished through a maintenance terminal 240 operatively connected to the service controller 200.

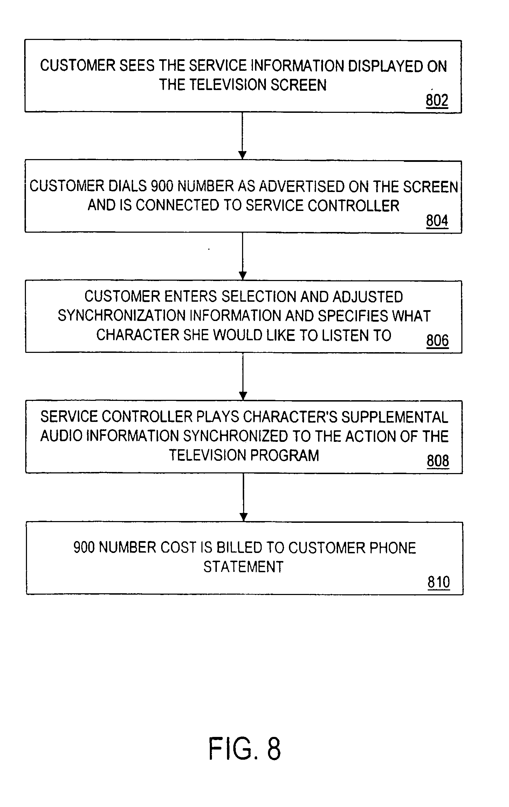

FIG. 8 is a flow chart depicting an exemplary operation of the preferred embodiment of the present invention from the point of view of a customer 101. The process starts when the customer 101 sees the service information 131 displayed on a TV screen while viewing the television program 130 in step 802.

As mentioned above, the service information 131 comprises three components: a 900 telephone number, selection information and synchronization information, as described in detail below. In this embodiment, one general 900 telephone number is provided for all the TV programs, and the selection information, is used to select particular supplemental information for the television program 130.

The synchronization information comprises a running time-code that is updated on the TV screen at predetermined intervals. The preferred interval for updating the time-code is every second. However, other intervals can also be used, for example, the time-code could be updated at specific milestones during the television program 130.

The time-code ensures that the supplemental audio information is properly synchronized to the TV program 130. It also allows the supplemental audio information to be synchronized to a TV program that has been taped using a video cassette recorder (VCR). Thus, the customer 101 may listen to supplemental audio information for a TV program while it is being broadcast, or during a time-shifted playback of a previously broadcast TV program.

An example of the time-code in the preferred embodiment is the number "3600." In this case, the time-code indicates that the supplemental audio information should be offset by sixty minutes and zero seconds (i.e., 3600 seconds, which is exactly sixty minutes). Of course, time-codes greater than four digits can also be used if greater offsets are required.

As understood by one of ordinary skill in the art of telephony, 900 telephone numbers provide services (e.g. weather or sports information) for which the caller is charged a pre-determined rate per minute of use. In a similar manner, the customer 101 is charged for supplemental audio information provided.

In an alternative embodiment, a unique 900 telephone number for each television program 130 may be used, instead of one general 900 telephone number. In such an embodiment, the service controller 200 determines which television program 130 is being viewed by the customer 101 based on the unique 900 telephone number dialed. In another embodiment, 800 or 888 numbers may also be used. In such an embodiment, the customer 101 is prompted for a credit card number to pay for the supplemental audio information. Arrangements could also be made for prepaid minutes or service credits for particular customers.

By utilizing his or her telephone, the customer 101 communicates to the service controller 200 by making a conventional telephone call. In step 804, the customer 101 dials the 900 telephone number, which is provided as part of the service information 131, and is connected to the service controller 200. After the connection is made, the customer 101 is prompted via recorded voice messages to enter selection information and synchronization information related to the program being viewed. The telephone's keypad is used to enter this information. Alternatively, voice recognition software within the IVRU 112 could also be used to respond to voice commands from the customer 101.

After entering the synchronization information consisting of the time-code, the customer 101 can optionally adjust the entered time-code to ensure a close match with the running time-code on the television program 130. In particular, recorded messages transmitted from the IVRU 112 can prompt the customer 101 to adjust the time-code using the telephone keypad. For example, the "pound" key can be used to increment the value of the time-code, and the "star" key to decrement the value of the time-code.

The customer 101 then listens to a menu listing of characters. In step 806, the customer 101 selects which character (or group of characters) in the television program 130 for which he or she desires to receive supplemental audio information. Optionally, the customer 101 may be provided with additional menu choices such as the option of purchasing supplemental audio information for the entire television program 130 or just a portion.

In step 808, the service controller 200 plays the selected supplemental audio information synchronized to the action occurring on the television program 130. The supplemental audio information is synchronized so that it does not overlap with the spoken dialogue of the television program 130, but supplements it during appropriate pauses or gaps. The customer 101 receives the supplemental audio information via the telephone. Of course, the customer 101 can use a speaker phone or other speaker means to facilitate listening to the supplemental audio information.

In an alternative embodiment, an interface via the Internet may also be provided allowing the customer 101 to receive the supplemental audio information, as well as make the request for the supplemental audio information. This Internet interface may also be used to receive supplemental video or text information from the service controller 200 related to the particular television program 130 selected by the customer 101. For example, the text of a note handed between two characters on a TV program 130 could be displayed on a commercially available web browser running on a computer connected to the Internet.

The service charges are billed to the customer's periodic telephone statement in step 810. In the customer's periodic telephone statement, an itemized listing of the charges appear for each supplemental audio information received. Of course, the customer 101 may be billed in other ways, such as a separate statement for each use. Alternatively, instead of a 900 telephone number, an 800 or 888 telephone number may be provided through which the customer 101 would also be prompted to enter a valid credit card number to be billed for the service.

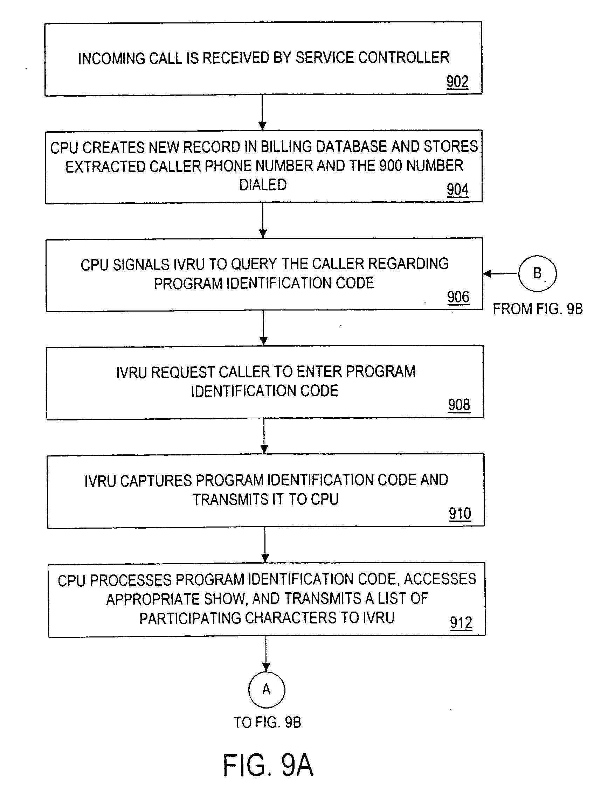

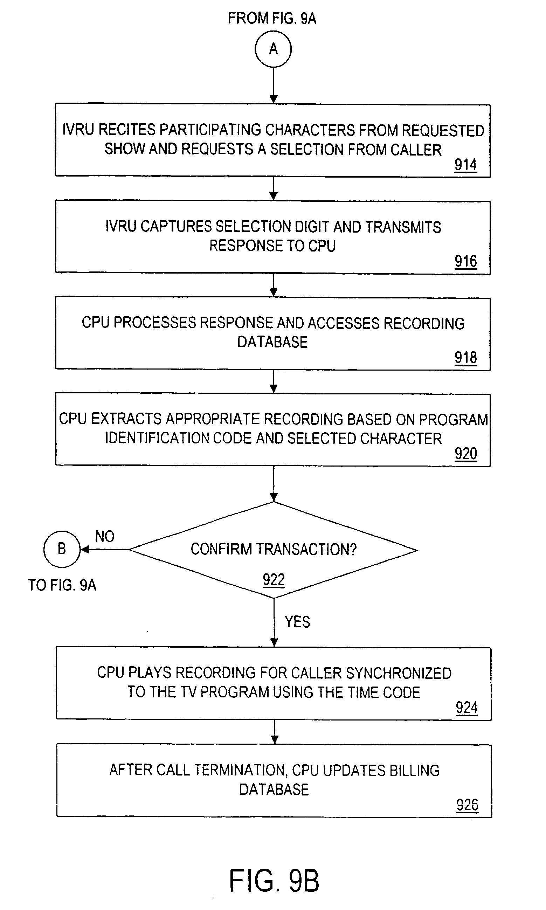

FIGS. 9A and 9B are flow charts of the exemplary operation of the service controller 200 after the customer 101 dials the 900 telephone number and is connected to the service controller 200 via the PSTN 110. The steps of the process shown in FIGS. 9A and 9B may be implemented in a computer program (not shown) that may be installed at the service controller 200 from a computer readable medium and then stored therein in one or more of the ROM 222, the RAM 223 and the data storage device 226 (shown in FIG. 2).

After the incoming call has been received by the service controller 200 in step 902, the CPU 221 creates in step 904 a new record in the billing database 700 (shown in FIG. 2). Stored in the appropriate fields (702 and 704, respectively in FIG. 7) in this new record are the caller's telephone number and the 900 telephone number dialed by the caller. As understood by one of ordinary skill in the art of telephony, the caller's telephone number is received from a telephone switch that established the connection through the PSTN 110.

In steps 906-908, the CPU 221 requests and receives the program identification code from the caller via the IVRU 112. The program identification code is processed, as discussed in detail below, by the service controller 200 in step 912. Also in step 912, the CPU 221 accesses the program database 400 and retrieves the list of participating characters stored in participating characters field 410 for the particular television program 130. The list is then transmitted to the IVRU 112.

In step 914, the caller (i.e. the customer 101) receives a recorded voice message from the IVRU 112 comprising a menu of the participating characters to choose from. The caller's character selection is captured and transmitted to the CPU 221 by the IVRU 112 in step 916. This information is processed by the service controller 200 which then accesses the recording database 600.

The recording database 600 contains identifying information for all the supplemental audio information stored within the data storage device 226 or accessible by the CPU 221. Based on the program identification code and character selection entered by the caller, the CPU 221 in step 920 obtains the appropriate supplemental audio information stored in the data storage device 226 or accessible by the CPU 221.

Before the supplemental audio information is communicated, the caller is prompted to confirm the transaction in step 922. This includes confirming the supplemental audio information selected by the caller as well as billing information. If the caller decides not to complete the transaction, he or she can simply hang up the telephone or start the process over to select different supplemental audio information.

After confirmation, the CPU 221 in step 924 communicates the supplemental audio information, which is synchronized to the action occurring on the television program 130 using the time-code entered by the caller. This is accomplished, as described above, by starting the supplemental information using the time-code as an offset. The CPU 221 starts playback of the supplemental audio information accordingly, based on the entered time-code.

After the call termination (i.e. the supplemental audio information is complete or the caller hangs up the telephone), the CPU 221 in step 926 updates the caller's record in the billing database 700. This record is used to track the cost of the call. The actual billing is done by the phone company, who, upon receipt of payment from the caller, reimburses the service for the cost of the content. The service charge information is sent to the caller's telephone service provider and appears on the caller's monthly or periodic telephone statement. Of course, alternate methods of payment may be used instead, including credit card transactions, debit cards, or the caller could receive a separate bill for each use and pay by check or similar means. In these cases, the billing database would be used to actually bill the customer 101 and/or interact with a credit card company.

The revenues generated by the service can be distributed in a variety of ways among the various persons and organizations providing the service (i.e. the TV program provider, the 900 service provider, the actors, etc.).

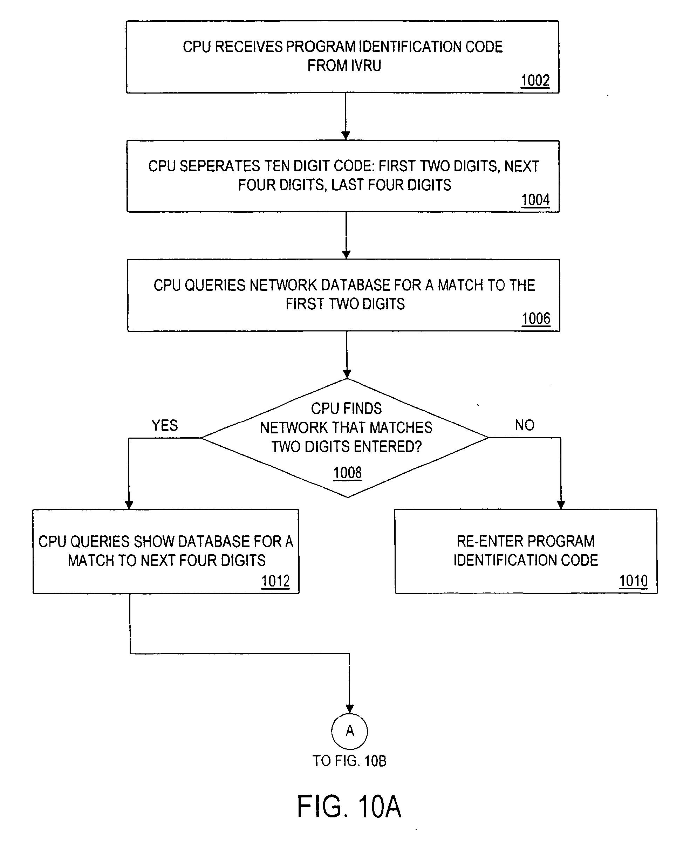

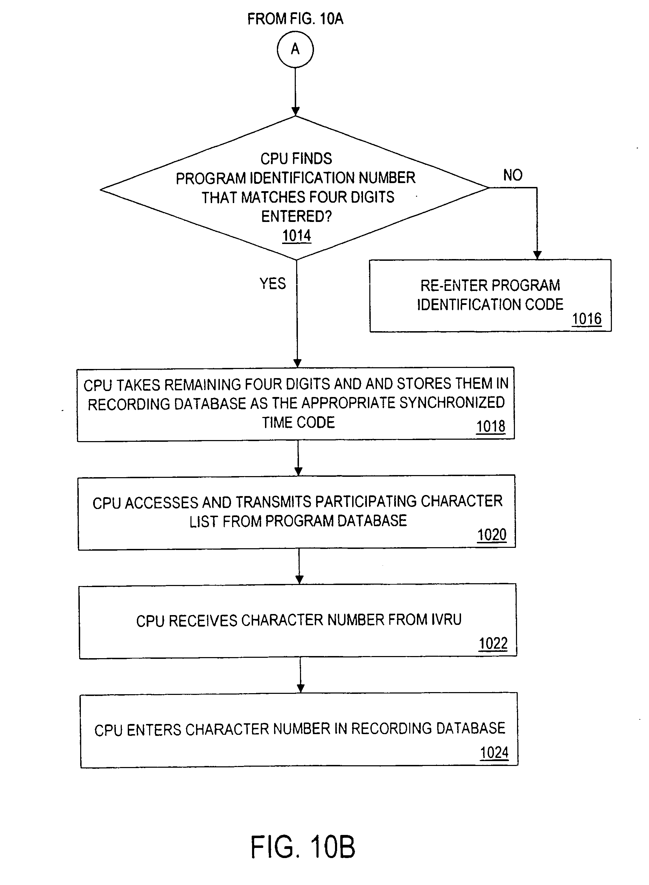

FIGS. 10A and 10B are flow charts depicting how the service controller processes information received from the IVRU 112. In step 1002, the CPU 221 receives the ten digit alphanumeric string from the IVRU 112. These ten digits represent the program identification code which is entered by the customer 101 via his or her telephone, as discussed above.

In step 1004, the CPU 221 separates the ten digit string as follows: the first two digits, the next four digits, and the last four digits. As described below, the separated strings represent program selection information and synchronization information related to the broadcast television program 130.

The first two digits represent the network identification number for the television program 130. In step 1006, the CPU 221 searches for a match in the network identification number field 304 of the network database 300. If no match is found in step 1008, the CPU 221 prompts the customer 101 via the IVRU 112 to reenter the program identification code in step 1010. Otherwise, the CPU 221 continues to step 1012.

The next four digits of the program identification code represent the program identification number. In step 1012, the CPU 221 searches for a match in the program identification number field 404 of the program database 400. If no match is found in step 1014, the CPU 221 prompts the customer 101 via the IVRU 112 to reenter the program identification code in step 1016. Otherwise, the CPU 221 continues to step 1018.

Alternatively, the program identification code can have more than ten digits. This would allow additional information to be entered by the caller, for example, an episode number. The last four digits of the program identification code represent the synchronization information (i.e. the time-code).

In step 1018, the CPU 221 stores the time-code in a new record created for the customer 101 in the recording database 600. Once the time-code has been received (and adjusted), the CPU 221 updates the time-code at the predetermined intervals to ensure proper synchronization with the television program 130 is maintained. Other information including the program identification number and the number dialed by the caller are also stored in the new record.

In an alternative embodiment, the synchronization information may be derived by the service controller 200 directly from the television program 130. The user, for example, could hold the telephone up to the speaker of the television so that the service controller 200 could receive the synchronization information. The service controller 200 would monitor the audio component of the television program 130 and compare it with the corresponding audio track (i.e. a duplicate) stored at the service controller 200. Using the stored copy, the service controller 200 would synchronize the supplemental audio information without requiring the customer 101 to enter any additional information.

The CPU 221 accesses the participating characters field 410 in the program database 400 and transmits the list to the caller via the IVRU 112 in step 1020. The CPU 221 receives from the caller via the IVRU 112 the character selection number in step 1022. Once again, the caller enters this information using his or her telephone keypad. The character selection number is a two digit alphanumeric string. The CPU 221 receives it and enters it in the appropriate field in the recording database 600 in step 1024.

In an alternative embodiment, the supplemental audio information may be used to offer services such as foreign language translations of TV programs and descriptive audio for the blind.

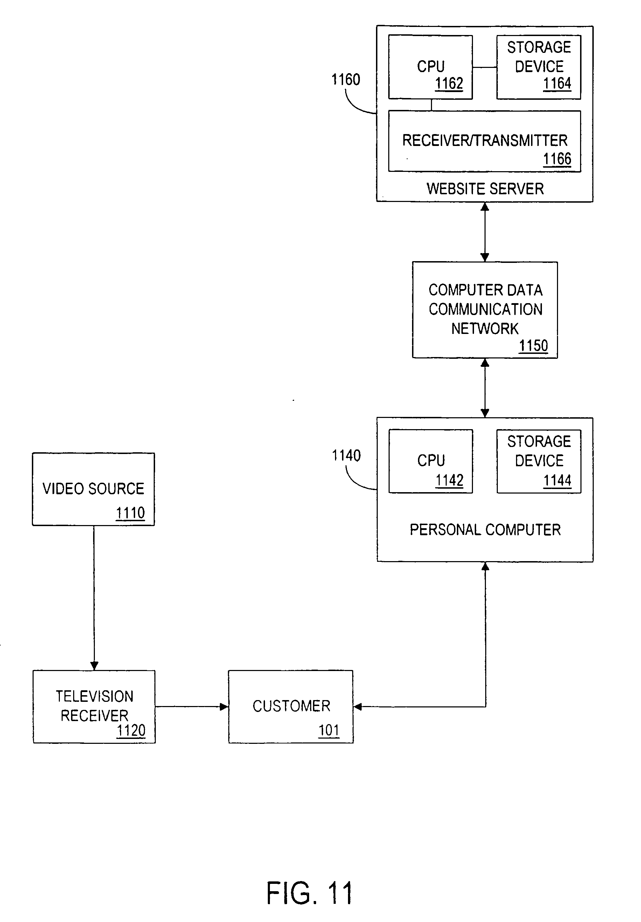

FIG. 11 is a schematic block diagram overview of one system constructed in accordance with the present invention. A television receiver 1120 receives a video program from a video source 1110 while a customer 101 observes the video program. While one customer is depicted receiving the video program from the television receiver 1120, it is understood that the video program may be broadcast to and/or viewed by multiple customers.

As depicted in FIG. 11, the video program is received and displayed by the television receiver 1120 located in proximity to the customer 101. Of course, other types of video signal display devices may be used instead of a conventional television set, such as, a personal computer adapted to receive and display video signals. The television receiver 1120 may receive the video program through an antenna adapted to receive TV signals from a TV broadcast station, from a satellite transponder, a trunk cable from a CATV (i.e. cable TV) system, or from any other suitable transmission means, as well as a playback of a pre-recorded program from a video cassette, laserdisc or compact disc.

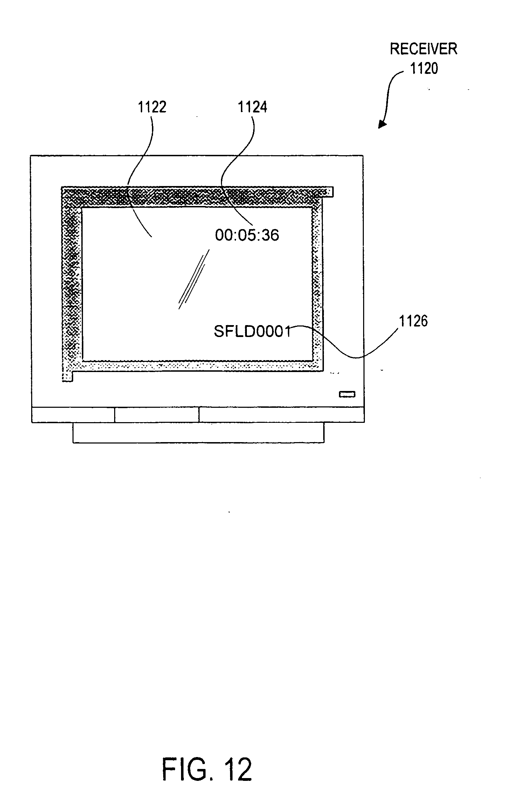

As illustrated in FIG. 12, program identification information 1126 and synchronization information 1124 are displayed discretely on a display screen 1122 of the television receiver 1120. This information is integrated with the video program. The location of this information may be anywhere on the display screen 1122. The amount of display area consumed by the information (i.e., font size) may also be varied. Program identification information 1126 and synchronization information 1124 may also be presented in a non-visual machine readable format such as by embedding data in an audio track or using a portion of a video track not displayed on the television receiver 1120.

The program identification information 1126 and the synchronization information are recorded on the same recording medium as the video program. For example, a television program can be recorded and then the synchronization information can be added during editing of the recorded television program. Alternatively, this information can be added at the time of recording or broadcasting the television program. It is also understood that the program identification information 1126 and the synchronization information 1124 would be presented even if the video program is recorded on a recorded medium and played-back by the customer 101.

As shown in FIG. 12, the program identification information 1126 is an eight digit alphanumeric code uniquely representing the particular video program being displayed. It is understood that other types of identification tags may be used to distinguish video programs from each other such as graphical images or other symbols. Each video program contains one such code so that customers can request specific supplemental information related to that video program, as discussed below.

The synchronization information 1124 comprises a running time-code that is updated on the display screen 1122 at predetermined intervals. The preferred interval for updating the time-code is every second. However, other intervals can also be used, for example, the time-code could be updated at specific milestones during the video program such as after each commercial break or every few minutes.

As discussed above, the time-code ensures that the supplemental information is properly synchronized to the video program. It also allows the supplemental information to be synchronized to the video program that has been taped using a video cassette recorder ('VCR'). Therefore, the viewer may receive supplemental information for a TV program while it is being broadcast, or during a time-shifted playback of a previously broadcast TV program.

An example of the time-code in the preferred embodiment is "00:05:36." In this example, the time-code indicates that the supplemental information should be offset by five minutes and thirty-six seconds from the start of the video program. Of course, other time-codes formats can be used as well.

Referring back to FIG 11., the customer 101, by utilizing a personal computer 1140, communicates over a computer data communication network 1150 to a web site server 1160. The personal computer 1140 includes a CPU 1142, and a storage device 1144. The web,site server 1160 includes a CPU 1162, a receiver/transmitter 1166, and a storage device 1164. The web site server 1160 provides for storage of the supplemental information related to the various video programs on a server connected to the Internet. The supplemental information is stored in units, referred to as "web pages," which may include textual, graphic, audio and/or video information and hyperlinks to other information related to the particular video program. Specific portions of the web pages such as hyperlinks may be activated in synchronization with certain events during the video program.

Viewer 1130 can access the web site server 1160 through conventional interface software called a "web browser" or other data communication protocol means. To gain access to the web site server 1160, for example, customer 101 specifies the Internet address or URL associated with the web page to the web browser. The browser then communicates with the relevant web site server 1160 containing the web page data. A modem (not shown) or similar means can be used to facilitate communication with the web site server 1160. In the present invention, the URL of the web site server 1160 can be displayed before and/or during the video program. The URL can also be generally distributed in advertisements. For example, the URL can be printed in newspaper and magazine advertisements or displayed during a televised advertisement.

After accessing the web site server 1160, customer 101 is guided by a graphical user interface and icons (not shown) to access the supplemental information stored therein. In particular, customer 101 provides the program identification information 1126 and synchronization information 1124, to the web site server 1160. In response, the web site server 1160 first accesses the particular supplemental information related to the program identification information 1126 provided by customer 101. Then the web site server 1160 synchronizes the supplemental information to the action and events occurring in the video program based on the synchronization information 1124 (i.e., the time-code). This is accomplished by using the time-code as an offset, as described above. The supplemental information, in the form of web pages, is then sent to customer 101 via the personal computer 1140.

In one embodiment, customer 101 is prompted for a credit card number to pay for the supplemental information when accessing the web site server 1160. Arrangements could also be made for periodic service bills to be mailed to the customer 101. Alternative payment mechanisms include billing in conjunction with a 900, 800 or 888 telephone number, Digicash or Cybercash. The revenues generated by the service can be distributed in a variety of ways among the various persons and organizations providing the service (i.e. the video program provider, the Internet service provider, the actors, etc.).

When customer 101 receives the web pages, the information contained therein preferably corresponds to the action and events occurring in the video program. This ensures that the events contained within the supplemental information coincides with the content of the video program. Each event has a respective begin time and end time which is synchronized to the time-code, as shown in the example below:

| BEGIN-TIME | END-TIME | EVENT |
|---|---|---|
| 00:00:00 | 00:02:00 | display intro. images |
| 00:02:01 | 00:03:36 | show close-up of report |
| 00:03:37 | 00:10:56 | play camera angle #1 |
| 00:10:57 | 00:12:00 | show product menu |
| 00:12:01 | 00:20:00 | play scene #1 |
| 00:20:01 | 00:21:08 | show close-up of note |
| 00:21:09 | 00:26:11 | play audio #1 |
| 00:26:12 | 00:30:00 | display closing images |

Some of the supplemental information contained in the web site server 1160 may be selectable by customer 101. For example, customer 101 may choose to receive one or more close-ups of several documents, medical reports, suicide notes, etc. These choices are made available at the appropriate times throughout the video program. In addition, customer 101 may wish to select a particular character within a TV show and receive supplemental scenes and dialogue related to this character. Once again, these scenes are synchronized to accommodate when that character is "in" or "out" of the scene being displayed by the television receiver 1120.

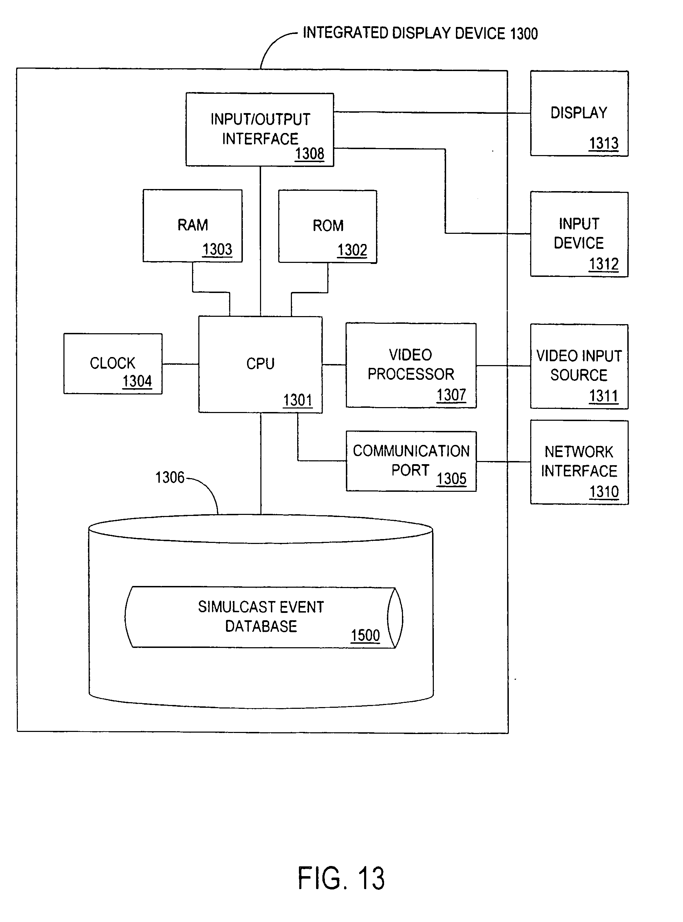

FIG. 13 is a schematic block diagram illustrating a preferred integrated display device 1300 of the present invention. This device integrates the functions of the television receiver 1120 and the personal computer 1140 discussed above. The integrated display device 1300 allows the video program and the supplemental information to be viewed on a single display 1313. Any one or a variety of display apparatuses are suitable for this purpose, including, for example a Cathode Ray Tube ("CRT"), Liquid Crystal Display ("LCD"), or similar apparatus capable of displaying high resolution color video signals. The display 1313 has segregated sections to display the video program, the supplemental information and a control/menu section (not shown). An input/output interface 1308 transmits the outgoing video/control signal to the display 1313.

The integrated display device 1300 includes a CPU 1301 which performs the processing functions. The integrated display device 1300 also includes a read only memory 1302 (ROM) and a random access memory 1303 (RAM). The ROM 1302 is used to store at least some of the program instructions that are to be executed by the CPU 1301, such as portions of the operating system or basic input-output system (BIOS), and the RAM 1303 is used for temporary storage of data. A clock 1304 provides timing signals which are required by the CPU 1301.

The CPU 1301 can also store information to, and read information from, a data storage device 1306. This storage device preferably includes or is adapted to receive static memory capable of storing large volumes of data, such as one or more of floppy disks, hard disks, CDs, or magnetic tapes.

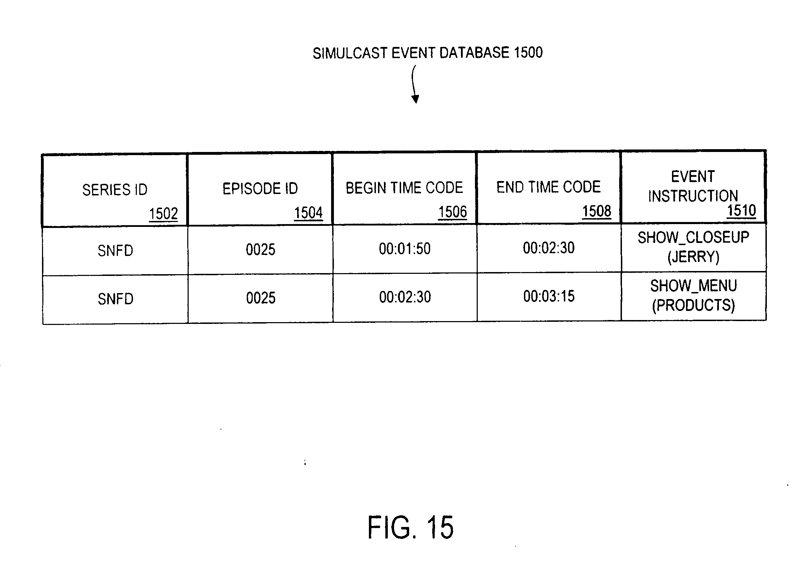

The data storage device 1306 includes a simulcast event database 1500. This database is described more fully with reference to FIG. 15, below. In addition, the data storage device 1306 includes instructions (not shown) which can be read by and executed by the CPU 1301, thereby enabling the CPU 1301 to process requests for supplemental information and control the data flow therein. Additional databases may be added as needed to store a variety of other information that may be required for other purposes.

The integrated display device 1300 also includes a communication port 1305 connected to a computer data communication network interface 1310. The communication port 1305 enables the CPU 1301 to communicate with eternal devices, in particular, with the web site server 1160 discussed above. The network interface 1310 serves as an interface between the CPU 1301, via the communication port 1305, and the web site server 1160. Network interface 1310 is capable of receiving data streams from both the CPU 1301 and the web site server 1160, and the data streams are formatted according to their respective communication protocols. Network interface 1310 can also reformat the data streams appropriately and relay the data streams accordingly. Network interface 1310 preferably can handle a variety of different communication protocols.

A video processor 1307 is used by the integrated display device 1300 to receive video signals from a video input source 1311. The video signals can be in either an analog or digital format. These signals are converted into a digital format suitable for storage and manipulation by the CPU 1301.

An input device 1312 is also connected to the input/output interface 1308. The input device 1312 is used to facilitate input of data by the customer 101 from either a mouse or keyboard. However, other input devices would be suitable for this purpose as well, including, for example, joysticks, trackballs, infra-red hand-held remote control units, video cameras, or even speech recognition devices. The input device 1312 may interface to CPU 1301 via input/output interface 1308, as shown in FIG. 13. Alternatively, input device 1312 may directly interface with the CPU 1301. The input device 1312 may also comprise a floppy disk drive, CD-ROM drive, or other such devices which are capable of reading data from computer readable media.

FIG. 15 shows an example of the simulcast event database 1500 within the integrated display device 1300. The simulcast event database 1500 comprises information related to the supplemental information available for each video program. This database includes a series ID field 1502, an episode ID field 1504, a begin time code field 1506, an end time code field 1508, and an event instruction field 1510. The series ID field 1502 corresponds to the first four digits of the program identification information 1126 associated with each video program, while the episode ID field 1504 corresponds to the last four digits. The begin and end time code fields 1506 and 1508, respectively, indicate when certain events related to the supplemental information are to occur as discussed above. These events are synchronized to the video program using the synchronization information 1124 (i.e., the time-code). The event instruction field 1510 indicates the type of events (i.e., supplemental information) that the customer 101 will receive at the specified times within the video program.

While only two records are depicted in FIG. 15, any number of records may be stored. To conserve storage space on the data storage device 1306, records may be transferred to a different storage device or deleted after some predetermined time interval or after a predetermined event (e.g., after the video program has been viewed).

The information stored in the simulcast event database 1500 can be updated in a number of ways. The integrated display device 1300 may communicate with the web site server 1160 and download the information related to a one or more video programs. This may be done before or during the viewing of the video program. It is understood that the information stored within the simulcast event database 1500 may be updated as needed.

In an alternative embodiment, the supplemental information can be downloaded into the simulcast event database 1500 from a computer readable medium, such as a CD-ROM, floppy disk, and the like. In this embodiment, the integrated display device 1300 would execute a stand-alone computer application designed to synchronize and display the supplemental information. The computer application could be distributed, for example, via a CD-ROM or the Internet.

The personal computer 1140 could also execute a stand-alone computer application coupled with an integrated simulcast event database 1500 to provide synchronized supplemental information to the customer 101. In this embodiment, the customer 101 would not be required to access the web site server 1160 each time supplemental information related to a particular video program was desired. The customer 101 would simply download the computer application and the simulcast event database 1500 beforehand and execute the computer application when viewing the video program. Alternatively, as discussed above, the computer application and database could be distributed using other means such as a CD-ROM.

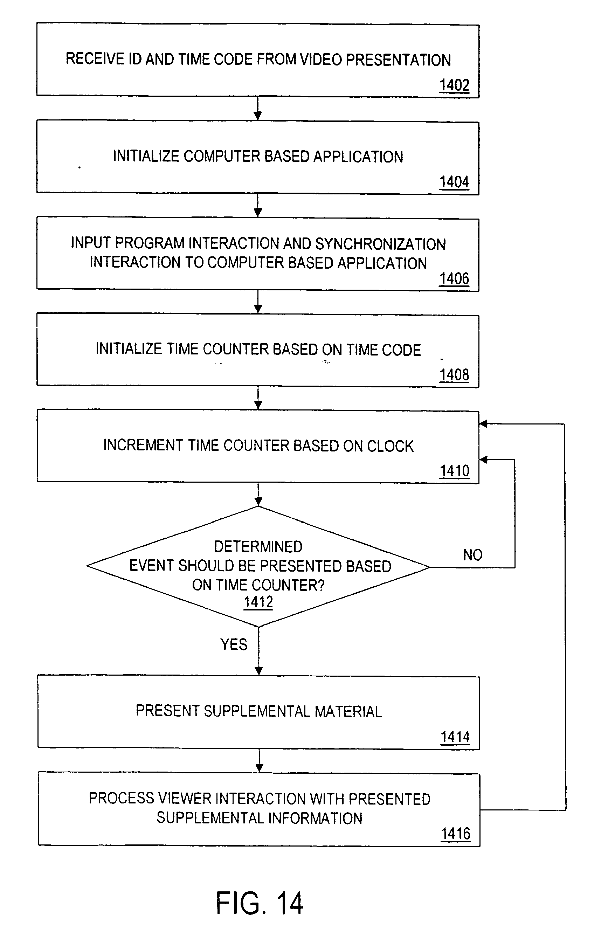

FIG. 14 is a flow chart of the exemplary operation of the stand-alone computer application for presenting the supplemental information. The process will be described with reference to integrated display device 1300,however, the method could also be implemented using personal computer 1140. The process scarts when the customer 101 receives the program identification information 1126 and the synchronization information 1124 displayed on display screen 1122 while viewing the video program in step 1402. In step 1404, the computer application is initialized by the customer 101. This can be performed, for example, using a mouse to double click an icon representing the computer application. The customer 101 is then prompted to enter the program identification information 1126 and the synchronization information 1124 via the input device 1312 in step 1406.

After entering the synchronization information 1124 consisting of the time-code, customer 101 can optionally adjust the entered time-code to ensure a close match with the running time-code contained within the video program. In particular, pop-up messages and menu selections prompt and guide the customer 101 to adjust the time-code using the input device 1312. This can also be accomplished using the keyboard or mouse (not shown) of the personal computer 1140.

In step 1408, the program identification information 1126 is processed. Based on the program identification information 1126 entered by customer 101, the CPU 1301 obtains the appropriate supplemental information stored in the simulcast event database 1500 or accessible by the CPU 1301 via external means (i.e., from a CD-ROM or the web site server 1160). The CPU 1301 also initializes a time counter based on the synchronization information and updates the time counter based on timing signals from internal clock. The time-code entered by customer 101 is incremented (step 1410) at predetermined intervals (e.g., every second) to ensure that proper synchronization is maintained with the video program.

The CPU 1301 determines in step 1412 when to present specific events (part of the supplemental information) based on the continually updated time counter. For example, when the updated time counter is greater-than or equal to the BEGIN-TIME but less-than the END-TIME for a specific event, that event is presented to customer 101. The first event presented to the customer 101 is thereby synchronized to the video program. The first event is off-set using the time-code information, so that proper synchronization with the video program is maintained.

In step 1414, the integrated display device 1300 displays the event synchronized to the action occurring on the video program.

As discussed above, customer 101 may also select various options while the supplemental information is being presented. When optional or selectable information is available, customer 101 is prompted by various means such as: pop windows, menu choices, dialog boxes, etc. appearing on the display 1313. Methods of implementing these applications will be apparent to those skilled in the art, and will not be further described in the present disclosure. Customer 101 can then exercise an option via an input device such as input device 1312. In step 1416, the response of customer 101 is processed and the appropriate supplemental information is presented accordingly.

The process then loops back to step 1410 and is repeated until the end of the video program or customer 101 terminates the computer application.

In an alternative embodiment, the program identification information 1126 and the synchronization information 1124 may be derived by the integrated display device 1300 directly from the video program. The video processor 1307 of the integrated display device 1300 extracts the necessary information as needed. Since this process would be transparent to the customer 101, the information would not need to be visually displayed.

While the present invention has been described above in terms of specific embodiments, it is to be understood that the invention is not intended to be confined or limited to the embodiments disclosed herein. On the contrary, the present invention is intended to cover various methods, structures and modifications thereof included within the scope of the appended claims.

## Claims

1. A system for providing supplemental broadcast information, comprising:
a CPU (221);
a storage device (226) operatively connected to said CPU;
an apparatus (212, 225), adapted for communicating with said CPU, for receiving a request for supplemental information related to a broadcast television program or a video program and for relaying the request to said CPU; and
said storage device storing a program, adapted to be executed by said CPU, for processing the request for supplemental information and for transmitting the requested supplemental information;
the system being **characterised in that**:
(a) said request is made by a caller over a telephone network,
(b) said supplemental information comprises audio information supplied to the caller over said telephone network, and
(c) wherein playback of said audio information over said telephone network does not overlap dialogue spoken by any character within the broadcast television program or the video program.

2. The system according to claim 1, wherein the audio information is recorded on a recording medium.

3. The system according to claim 2, wherein said audio information recorded on the recording medium comprises supplemental dialogue for a character within the broadcast television program.

4. The system according to claim 2, wherein said storage device contains a database to store the supplemental information, and said program stored within said storage device is further adapted to perform maintenance related to said database.

5. The system according to claim 1, wherein the supplemental information comprises live information.

6. The system according to claim 1, wherein the audio information comprises live audio commentary.

7. The system according to claim 1, wherein said apparatus comprises an Interactive Voice Response Unit (112) including a plurality of voice messages, and wherein said voice messages are used to communicate to, and obtain information from, the caller.

8. The system according to claim 1, wherein the request for supplemental information includes providing selection information and synchronization information.

9. The system according to claim 8, wherein the synchronization information comprises a time-code; and said program is further adapted to update said time-code at predetermined intervals, and to use said time-code to synchronize the supplemental information to an audio component of the broadcast television program or video program.

10. The system according to claim 1, wherein the audio information comprises a foreign language translation of the broadcast television program or video program.

11. A system according to claim 1, further comprising:
means for broadcasting a television program including an audio component and a video component;
at least one supplemental component for said broadcast television program; and
wherein transmitting of the requested supplemental information includes providing a playback of the requested supplemental component which is time synchronised to said audio component of said broadcast television program.

12. The system according to claim 11, wherein the broadcast television program is selected from the group consisting of a live broadcast and a pre-recorded broadcast.

13. The system according to claim 11, wherein the playback of the requested supplemental information is transmitted via a telephone network interface.

14. The system according to claim 11, wherein said video component of said broadcast television program contains synchronisation information and selection information.

15. The system according to claim 14, wherein the program is further adapted to receive and process said synchronization information.

16. The system according to claim 11, wherein the program is further adapted to receive the request for said supplemental component from a telephone network interface.

17. A system according to claim 1, wherein the apparatus is adapted for receiving synchronization information related to the video program, and for relaying the synchronization information to said CPU; and wherein the program is further adapted to synchronize the supplemental information to the video program, and to transmit the synchronized supplemental information over the telephone network.

18. The system according to claim 17, wherein the supplemental information comprises audio and visual information recorded on a recording medium.

19. The system according to claim 18, wherein said storage device contains a database to store the supplemental information, and said program within said storage device is further adapted to perform database maintenance.

20. The system according to claim 17, said program is further adapted for receiving program identification information related to the video program and for transmitting the program identification information through said receiver/transmitter over the telephone network.

21. The system according to claim 17, wherein the synchronization information comprises a time-code; and said program is further adapted to update said time-code at predetermined intervals.

22. The system according to claim 17, wherein said apparatus is adapted for receiving additional requests from a requestor to interactively change the requested supplemental information based upon the viewed video program; and
said program is further adapted to change and transmit the requested supplemental information in accordance with the additional requests from the requestor.

23. A method for providing supplemental information synchronized to a broadcast television program or a video program using a CPU (221), and a storage device (226) operatively connected to the CPU and containing a program adapted to be executed by the CPU for processing a request for supplemental information, and an apparatus (212, 225) adapted for communicating with CPU, said method comprising:
receiving the request for supplemental information from a requestor via the apparatus; receiving selection information from the requestor via the apparatus; processing the selection information by having the CPU execute the program; receiving synchronization information; synchronising the requested information with the broadcast television program or video program using the synchronisation information; and communicating the requested supplemental information to the requestor; **characterised in that**:
(a) said request is made by the requestor over a telephone network,
(b) said supplemental information comprises audio information supplied to the requestor over said telephone network, and
(c) wherein playback of said audio information over said telephone network does not overlap dialogue spoken by any character within the broadcast television program or the video program.

24. The method according to claim 23, further comprising the step of updating a database within the storage device indicating that the requested supplemental information has been communicated in said communicating step.

25. The method according to claim 23, further comprising the step of requesting payment for the communicated supplemental information.

26. The method according to claim 23, wherein the communicated supplemental information comprises supplemental dialogue for a character within the broadcast television program or video program.

27. The method according to claim 23 further including broadcasting a television program including an audio component and a video component.

28. The method according to claim 27, wherein the requested supplemental information is live audio information.

29. The method according to claim 27, wherein the requested supplemental information is pre-recorded on a recording medium.

30. The method according to claim 27, further comprising the step of recording on a recording medium the supplemental information.

31. The method according to claim 27, wherein the broadcasting step further comprises broadcasting ordering information for the supplemental information.

32. The method according to claim 27, wherein the broadcasting step further comprises broadcasting synchronization information related to the television program.

33. A method according to claim 32, wherein the step of broadcasting the synchronization information further comprises broadcasting a time-code that is updated at predetermined intervals and which is used to synchronize the supplemental information to the television program broadcast in said transmitting step.

34. The method according to claim 32, wherein the step of receiving the request for the supplemental information includes receiving the synchronization information from the requestor.

35. A method according to claim 23 including synchronizing to an audio component at the broadcast television or video programme.

36. The method according to claim 23, wherein the requested supplemental information comprises audio and visual information.

37. The method according to claim 23, further comprising the step of providing program identification information prior to processing the request.

38. The method according to claim 23, wherein the synchronization information comprises a time-code which is updated at predetermined intervals.

39. The method according to claim 23 further comprising the step of:
receiving additional requests to interactively change the requested supplemental information based upon the viewed television video program; and
changing the requested supplemental information in accordance with the additional requests.

40. A method for receiving supplemental information, comprising:
displaying a video program (1110) including an audio component, a visual component and synchronization information; initiating a computer program adapted to process a request for supplemental information related to the action and events occurring within the video program; requesting the supplemental information; transmitting information corresponding to the synchronization information from the video program; receiving the supplemental information; and
outputting the requested supplemental audio information, synchronized to the video program in accordance with synchronization information;
**characterised in that**:
(a) said request is made by a caller over a telephone network,
(b) said supplemental information comprises audio information supplied to the caller over said telephone network, and
(c) wherein playback of said audio information over said telephone network does not overlap dialogue spoken by any character within the video program.

41. A method according to claim 40, the method using a display device (1120) for displaying the video program and a data processing apparatus including a CPU (1142) and a storage device (1144) operatively connected to the CPU and containing a program adapted to be executed by the CPU for requesting the supplemental information and for displaying the supplemental information.

42. The method according to claim 40, wherein the visual component of the video program contains program identification information related to the video program.

43. The method according to claim 40, wherein the visual component of the video program contains the synchronization information.

44. A method according to claim 43, wherein the synchronization information comprises a time-code that is changed at predetermined intervals and which is used to synchronize the supplemental information to the video program.

45. The method according to claim 40, further comprising the step of making additional requests to change, interactively, the requested supplemental information.

46. The method according to claim 40, further comprising receiving program identification information and synchronization information related to the video program.

47. A method according to claim 46, wherein the step of receiving synchronization information comprises receiving a time-code which is updated at predetermined intervals.

48. A method according to claim 46, further including the step of paying for the supplemental information.

49. A method according to claim 48, wherein the step of paying for the supplemental information is accomplished by a credit card transaction.

50. A method according to claim 48, wherein said step of paying for the Supplemental information is performed through payment of a service statement.

51. A method according to claim 46, further comprising the step of making additional requests to change the requested supplemental information.

52. A method according to claim 46, further comprising the step of initiating a computer application program for processing the request for supplemental information made in said requesting step.

## Patentansprüche

1. System zum Bereitstellen von zusätzlichen Rundfunkinformationen, mit:
einer CPU (221);
einer Speichervorrichtung (226), die mit der CPU operativ verbunden ist;
einer Einrichtung (212, 225), die zur Kommunikation mit der CPU eingerichtet ist, um eine Anfrage für Zusatzinformationen betreffend eines gesendeten TV-Programms oder eines Videoprogramms zu empfangen und um die Anfrage an die CPU weiterzuleiten; und
einer Speichervorrichtung, die ein von der CPU auszuführendes Programm aufweist, um die Anfrage für Zusatzinformationen zu bearbeiten und um die angefragten Zusatzinformationen zu übertragen;
wobei das System **dadurch gekennzeichnet ist, dass**
(a) die Anfrage durch einen Anrufer über ein Telefonnetzwerk erfolgt;
(b) die Zusatzinformationen Audioinformationen umfassen, die dem Anrufer über das Telefonnetzwerk zugeführt werden, und
(c) wobei das Wiedergeben der Audioinformationen über das Telefonnetzwerk den von jedwedem Charakter im gesendeten TV-Programm oder Videoprogramm gesprochenen Dialog nicht überlagert.

2. System nach Anspruch 1, wobei die Audioinformationen auf einem Aufnahmemedium aufgenommen sind.

3. System nach Anspruch 2, wobei die auf dem Aufnahmemedium aufgenommenen Audioinformationen einen Ergänzungsdialog für einen Charakter im übertragenen TV-Programm umfassen.

4. System nach Anspruch 2, wobei die Speichervorrichtung eine Datenbank enthält, um die Zusatzinformationen zu speichern, und wobei das auf der Speichervorrichtung gespeicherte Programm weiters eingerichtet ist, um eine Wartung hinsichtlich der Datenbank durchzuführen.

5. System nach Anspruch 1, wobei die Zusatzinformationen Live-Informationen umfassen.

6. System nach Anspruch 1, wobei die Audioinformationen Live-Audiokommentare umfassen.

7. System nach Anspruch 1, wobei die Einrichtung eine interaktive Sprachbeantwortungseinheit (112) umfasst, die eine Mehrzahl von Sprachmitteilungen enthält, und wobei die Sprachmitteilungen verwendet werden, um mit dem Anrufer zu kommunizieren und von diesem Informationen zu erhalten.

8. System nach Anspruch 1, wobei die Anfrage für Zusatzinformationen das Bereitstellen von Auswahlinformationen und Synchronisationsinformationen enthält.

9. System nach Anspruch 8, wobei die Synchronisationsinformationen einen Zeitcode umfassen; und wobei das Programm weiters eingerichtet ist, um den Zeitcode in vordefinierten Intervallen zu aktualisieren und um diesen Zeitcode zum Synchronisieren der Zusatzinformationen mit einer Audiokomponente des gesendeten TV-Programms oder Videoprogramms zu verwenden.

10. System nach Anspruch 1, wobei die Audioinformationen eine Fremdsprachenübersetzung des gesendeten TV-Programms oder Videoprogramms umfassen.

11. System nach Anspruch 1, weiters mit:
Mitteln zum Senden eines TV-Programms mit einer Audiokomponente und einer Videokomponente;
zumindest einer Zusatzkomponente für das gesendete TV-Programm; und
wobei das Übertragen der angefragten Zusatzinformationen das Bereitstellen einer Wiedergabe der angefragten Zusatzkomponente umfasst, die zeitlich mit der Audiokomponente des gesendeten TV-Programms synchronisiert ist.

12. System nach Anspruch 11, wobei das gesendete TV-Programm ausgewählt ist aus der Gruppe bestehend aus einer Live-Übertragung und einer zuvor aufgenommenen Übertragung.

13. System nach Anspruch 11, wobei die Wiedergabe der angeforderten Zusatzinformationen über eine Telefonnetzwerkschnittstelle übertragen wird.

14. System nach Anspruch 11, wobei die Videokomponente des gesendeten TV-Programms Synchronisationsinformationen und Auswahlinformationen enthält.

15. System nach Anspruch 14, wobei das Programm weiters eingerichtet ist, um die Synchronisationsinformationen zu empfangen und zu verarbeiten.

16. System nach Anspruch 11, wobei das Programm weiters eingerichtet ist, um die Anfrage für die Zusatzkomponente von einer Telefonnetzwerkschnittstelle zu empfangen.

17. System nach Anspruch 1, wobei die Einrichtung eingerichtet ist, um sich auf das Videoprogramm beziehende Synchronisationsinformationen zu empfangen und um die Synchronisationsinformationen an die CPU weiterzuleiten; und
wobei das Programm weiters eingerichtet ist, um die Zusatzinformationen mit dem Videoprogramm zu synchronisieren und um die synchronisierten Zusatzinformationen über das Telefonnetzwerk zu übertragen.

18. System nach Anspruch 17, wobei die Zusatzinformationen Audioinformationen und visuelle Informationen umfassen, die auf einem Aufnahmemedium aufgenommen sind.

19. System nach Anspruch 18, wobei die Speichervorrichtung eine Datenbank zum Speichern der Zusatzinformationen enthält, und wobei das Programm auf der Speichervorrichtung weiters eingerichtet ist, um die Datenbankwartung durchzuführen.

20. System nach Anspruch 17, wobei das Programm weiters eingerichtet ist, um Programmidentifikationsinformationen betreffend das Videoprogramm zu empfangen und um die Programmidentifikationsinformationen durch den Sender/Empfänger über das Telefonnetzwerk zu übertragen.

21. System nach Anspruch 17, wobei die Synchronisationsinformationen einen Zeitcode umfassen, und wobei das Programm weiters eingerichtet ist, um den Zeitcode in vordefinierten Intervallen zu aktualisieren.

22. System nach Anspruch 17, wobei die Einrichtung eingerichtet ist, um zusätzliche Anfragen von einem Anfrager zu empfangen, um die angefragten Zusatzinformationen basierend auf dem angesehenen Videoprogramm interaktiv zu ändern; und
wobei das Programm weiters eingerichtet ist, um die angefragten Zusatzinformationen gemäß den zusätzlichen Anfragen vom Anfrager zu ändern und zu übertragen.

23. Verfahren zum Bereitstellen von Zusatzinformationen, die mit einem gesendeten TV-Programm oder Videoprogramm synchronisiert sind, unter Verwendung einer CPU (221) und einer Speichervorrichtung (226), die mit der CPU operativ verbunden ist und ein von der CPU auszuführendes Programm zum Bearbeiten einer Anfrage für Zusatzinformationen enthält, und einer Einrichtung (212, 225) zum Kommunizieren mit der CPU, wobei das Verfahren umfasst:
Empfangen der Anfrage für Zusatzinformationen von einem Anfrager über die Einrichtung; Empfangen von Auswahlinformationen vom Anfrager über die Einrichtung; Bearbeiten der Auswahlinformationen, indem die CPU zur Ausführung des Programms veranlasst wird; Empfangen der Synchronisationsinformationen; Synchronisieren der angefragten Informationen mit dem gesendeten TV-Programm oder Videoprogramm unter Verwendung der Synchronisationsinformationen; und Kommunizieren der angefragten Zusatzinformationen zum Anfrager;
**dadurch gekennzeichnet, dass**:
(a) die Anfrage durch einen Anfrager über ein Telefonnetzwerk erfolgt;
(b) die Zusatzinformationen Audioinformationen umfassen, die dem Anfrager über das Telefonnetzwerk zugeführt werden, und
(c) wobei das Wiedergeben der Audioinformationen über das Telefonnetzwerk den von jedwedem Charakter im gesendeten TV-Programm oder Videoprogramm gesprochenen Dialog nicht überlagert.

24. Verfahren nach Anspruch 23, weiters mit dem Schritt des Aktualisierens einer Datenbank auf der Speichervorrichtung, die anzeigt, dass die angefragten Zusatzinformationen in diesem Kommunikationsschritt kommuniziert wurden.

25. Verfahren nach Anspruch 23, weiters mit dem Schritt des Anfragens einer Zahlung für die kommunizierten Zusatzinformationen.

26. Verfahren nach Anspruch 23, wobei die kommunizierten Zusatzinformationen einen Zusatzdialog für einen Charakter im gesendeten TV-Programm oder Videoprogramm umfassen.

27. Verfahren nach Anspruch 23, weiters umfassend das Senden eines TV-Programms mit einer Audiokomponente und einer Videokomponente.

28. Verfahren nach Anspruch 27, wobei die angefragten Zusatzinformationen Live-Audioinformationen sind.

29. Verfahren nach Anspruch 27, wobei die angefragten Zusatzinformationen auf einem Aufnahmemedium vorab aufgenommen sind.

30. Verfahren nach Anspruch 27, weiters mit dem Schritt des Aufnehmens der Zusatzinformationen auf einem Aufnahmemedium.

31. Verfahren nach Anspruch 27, wobei der Sendeschritt weiters das Senden von Bestellinformationen für die Zusatzinformationen umfasst.

32. Verfahren nach Anspruch 27, wobei der Sendeschritt weiters das Senden von sich auf das TV-Programm beziehenden Synchronisationsinformationen umfasst.

33. Verfahren nach Anspruch 32, wobei der Schritt des Sendens der Synchronisationsinformationen weiters das Senden eines Zeitcodes umfasst, der in vordefinierten Zeitintervallen aktualisiert und verwendet wird, um die Zusatzinformationen mit dem Senden des TV-Programm im Übertragungsschritt zu synchronisieren.

34. Verfahren nach Anspruch 32, wobei der Schritt des Empfangens der Anfrage für die Zusatzinformationen das Empfangen der Synchronisationsinformationen vom Anfrager enthält.

35. Verfahren nach Anspruch 23, enthaltend das Synchronisieren mit einer Audiokomponente im gesendeten TV-Programm oder Videoprogramm.

36. Verfahren nach Anspruch 23, wobei die angefragten Zusatzinformationen Audioinformationen und visuelle Informationen umfassen.

37. Verfahren nach Anspruch 23, weiters mit dem Schritt des Bereitstellens von Programmidentifikationsinformationen, bevor die Anfrage bearbeitet wird.

38. Verfahren nach Anspruch 23, wobei die Synchronisationsinformationen einen Zeitcode umfassen, der in vordefinierten Intervallen aktualisiert wird.

39. Verfahren nach Anspruch 23, weiters mit den Schritten:
Empfangen von zusätzlichen Anfragen, um die angefragten Zusatzinformationen basierend auf dem angesehenen TV-Programm oder Videoprogramm interaktiv zu ändern; und
Ändern der angefragten Zusatzinformationen gemäß den zusätzlichen Anfragen.

40. Verfahren zum Empfangen von Zusatzinformationen mit:
Anzeigen eines Videoprogramms (1110) mit einer Audiokomponente, einer visuellen Komponente und mit Synchronisationsinformationen; Initiieren eines Computerprogramms, das eingerichtet ist, um eine Anfrage für Zusatzinformationen betreffend die Handlung und Ereignisse im Videoprogramm zu bearbeiten; Anfragen der Zusatzinformationen; Übertragen der Informationen entsprechend den Synchronisationsinformationen vom Videoprogramm; Empfangen der Zusatzinformationen; und
Ausgeben der angefragten Audioinformationen, die mit dem Videoprogramm gemäß den Synchronisationsinformationen synchronisiert sind; **dadurch gekennzeichnet, dass**:
(a) die Anfrage durch einen Anrufer über ein Telefonnetzwerk erfolgt;
(b) die Zusatzinformationen Audioinformationen umfassen, die dem Anrufer über das Telefonnetzwerk zugeführt werden, und
(c) wobei das Wiedergeben der Audioinformationen über das Telefonnetzwerk den von jedwedem Charakter innerhalb des Videoprogramms gesprochenen Dialog nicht überlagert.

41. Verfahren nach Anspruch 40, wobei sich das Verfahren einer Anzeigevorrichtung (1120) zum Anzeigen des Videoprogramms und einer Datenverarbeitungseinrichtung mit einer CPU (1142) und einer Speichervorrichtung (1144) bedient, wobei Letztere mit der CPU operativ verbunden ist und ein zur Ausführung durch die CPU eingerichtetes Programm enthält, um die Zusatzinformationen anzufragen und anzuzeigen.

42. Verfahren anch Anspruch 40, wobei die visuelle Komponente des Videoprogramms Programmidentifikationsinformationen betreffend das Videoprogramm enthält.

43. Verfahren nach Anspruch 40, wobei die visuelle Komponente des Videoprogramms die Synchronisationsinformationen enthält.

44. Verfahren nach Anspruch 43, wobei die Synchronisationsinformationen einen Zeitcode umfassen, der in vordefinierten Intervallen geändert und verwendet wird, um die Zusatzinformationen mit dem Videoprogramm zu synchronisieren.

45. Verfahren anch Anspruch 40, weiters mit dem Schritt des Tätigens von zusätzlichen Anfragen, um die angefragten Zusatzinformationen interaktiv zu ändern.

46. Verfahren nach Anspruch 40, weiters mit Empfangen von Programmidentifikationsinformationen und Synchronisationsinformationen betreffend das Videoprogramm.

47. Verfahren nach Anspruch 46, wobei der Schritt des Empfangens von Synchronisationsinformationen das Empfangen eines Zeitcodes umfasst, der in vordefinierten Intervallen aktualisiert wird.

48. Verfahren nach Anspruch 46, weiters mit dem Schritt des Zahlens für Zusatzinformationen.

49. Verfahren nach Anspruch 48, wobei der Schritt des Zahlens für die Zusatzinformationen über eine Kreditkartentransaktion erfolgt.

50. Verfahren nach Anspruch 48, wobei der Schritt des Zahlens für die Zusatzinformationen über Zahlung einer Leistungsabrechnung erfolgt.

51. Verfahren nach Anspruch 46, weiters mit dem Schritt des Tätigens von zusätzlichen Anfragen, um die angefragten Zusatzinformationen zu ändern.

52. Verfahren nach Anspruch 46, weiters mit dem Schritt des Initiierens eines Computeranwendungsprogramms zum Bearbeiten der im Anfrageschritt getätigten Anfrage für Zusatzinformationen.

## Revendications

1. Système de fourniture d'informations de diffusion supplémentaires, comprenant :
une UC (221) ;
un dispositif de stockage (226) connecté de façon opérationnelle à ladite UC ;
un appareil (212, 225) conçu pour communiquer avec ladite UC, pour recevoir une demande d'informations supplémentaires relatives à un programme télédiffusé ou un programme vidéo ou pour transmettre la demande à ladite UC ; et
ledit dispositif de stockage stockant un programme, conçu pour être exécuté par ladite UC, pour traiter la demande d'informations supplémentaires et transmettre les informations supplémentaires demandées ;
le système étant **caractérisé en ce que** :
(a) ladite demande est effectuée par un appelant sur un réseau téléphonique ;
(b) lesdites informations supplémentaires comprennent des informations audio fournies par l'appelant sur ledit réseau téléphonique ; et
(c) dans lequel la lecture desdites informations audio sur ledit réseau téléphonique ne chevauche pas le dialogue d'un quelconque personnage au sein du programme télédiffusé ou du programme vidéo.

2. Système selon la revendication 1, dans lequel les informations audio sont enregistrées sur un support d'enregistrement.

3. Système selon la revendication 2, dans lequel lesdites informations audio enregistrées sur le support d'enregistrement comprennent un dialogue supplémentaire pour un personnage au sein du programme télédiffusé.

4. Système selon la revendication 2, dans lequel ledit dispositif de stockage contient une base de données pour stocker les informations supplémentaires, et ledit programme stocké à l'intérieur dudit dispositif de stockage est en outre conçu pour effectuer la maintenance relative à ladite base de données.

5. Système selon la revendication 1, dans lequel les informations supplémentaires comprennent des informations en direct.

6. Système selon la revendication 1, dans lequel les informations audio comprennent des commentaires audio en direct.

7. Système selon la revendication 1, dans lequel ledit appareil comprend une unité de réponse vocale interactive (112) incluant une pluralité de messages vocaux et dans lequel lesdits messages vocaux sont utilisés pour communiquer avec l'appelant et pour obtenir des informations de celui-ci.

8. Système selon la revendication 1, dans lequel la demande d'informations supplémentaires inclut la fourniture d'informations de sélection et d'informations de synchronisation.

9. Système selon la revendication 8, dans lequel les informations de synchronisation comprennent un code temporel ; et ledit programme est en outre conçu pour mettre à jour ledit code temporel à des intervalles prédéterminés, et pour utiliser ledit code temporel pour synchroniser les informations supplémentaires sur une composante audio du programme télédiffusé ou du programme vidéo.

10. Système selon la revendication 1, dans lequel les informations audio comprennent une traduction en langue étrangère du programme télédiffusé ou du programme vidéo.

11. Système selon la revendication 1, comprenant en outre :
des moyens pour diffuser un programme télévisé incluant une composante audio et une composante vidéo ;
au moins une composante supplémentaire pour ledit programme télédiffusé ; et
dans lequel la transmission des informations supplémentaires demandées inclut une lecture de la composante supplémentaire demandée qui est synchronisée dans le temps sur ladite composante audio dudit programme télédiffusé.

12. Système selon la revendication 11, dans lequel le programme télédiffusé est choisi dans le groupe comprenant une diffusion en direct et une diffusion préenregistrée.

13. Système selon la revendication 11, dans lequel la lecture des informations supplémentaires demandées est transmise via une interface de réseau téléphonique.

14. Système selon la revendication 11, dans lequel ladite composante vidéo dudit programme télédiffusé contient des informations de synchronisation et des informations de sélection.

15. Système selon la revendication 14, dans lequel le programme est en outre conçu pour recevoir et traiter lesdites informations de synchronisation.

16. Système selon la revendication 11, dans lequel le programme est en outre conçu pour recevoir la demande de ladite composante supplémentaire d'une interface de réseau téléphonique.

17. Système selon la revendication 1, dans lequel l'appareil est conçu pour recevoir des informations de synchronisation relatives au programme vidéo, et pour acheminer les informations de synchronisation vers ladite UC ; et dans lequel le programme est en outre conçu pour synchroniser les informations supplémentaires sur le programme vidéo, et pour transmettre les informations supplémentaires synchronisées sur le réseau téléphonique.

18. Système selon la revendication 17, dans lequel les informations supplémentaires comprennent des informations audio et visuelles enregistrées sur un support d'enregistrement.

19. Système selon la revendication 18, dans lequel ledit dispositif de stockage contient une base de données pour stocker les informations supplémentaires, et ledit programme au sein dudit dispositif de stockage est en outre conçu pour effectuer la maintenance de la base de données.

20. Système selon la revendication 17, ledit programme étant en outre conçu pour recevoir les informations d'identification de programme relatives au programme vidéo et pour transmettre les informations d'identification de programme par le biais dudit émetteur/récepteur sur le réseau téléphonique.

21. Système selon la revendication 17, dans lequel les informations de synchronisation comprennent un code temporel ; et ledit programme est en outre conçu pour mettre à jour ledit code temporel à des intervalles prédéterminés.

22. Système selon la revendication 17, dans lequel ledit appareil est conçu pour recevoir des demandes additionnelles de la part d'un demandeur pour modifier de manière interactive les informations supplémentaires demandées sur la base du programme vidéo visualisé ; et
ledit programme est en outre conçu pour modifier et transmettre les informations supplémentaires demandées selon les demandes additionnelles du demandeur.

23. Procédé consistant à fournir des informations supplémentaires synchronisées sur un programme télédiffusé ou un programme vidéo en utilisant une UC (221), et un dispositif de stockage (226) connecté de façon opérationnelle à l'UC et contenant un programme conçu pour être exécuté par l'UC pour traiter une demande d'informations supplémentaires, et un appareil (212, 225) conçu pour communiquer avec l'UC, ledit procédé consistant à :
recevoir la demande d'informations supplémentaires d'un demandeur via l'appareil ; recevoir des informations de sélection du demandeur via l'appareil ; traiter les informations de sélection en faisant exécuter le programme par l'UC ; recevoir les informations de synchronisation ; synchroniser les informations demandées avec le programme télédiffusé ou le programme vidéo en utilisant les informations de synchronisation ; et communiquer les informations supplémentaires demandées au demandeur ; **caractérisé en ce que** :
(a) ladite demande est effectuée par le demandeur sur un réseau téléphonique,
(b) lesdites informations supplémentaires comprennent des informations audio fournies au demandeur sur ledit réseau téléphonique, et
(c) dans lequel la lecture desdites informations audio sur ledit réseau téléphonique ne chevauche pas le dialogue d'un quelconque personnage au sein du programme télédiffusé ou du programme vidéo.

24. Procédé selon la revendication 23, comprenant en outre l'étape consistant à mettre à jour une base de données au sein du dispositif de stockage en indiquant que les informations supplémentaires demandées ont été communiquées dans ladite étape de communication.

25. Procédé selon la revendication 23, comprenant en outre l'étape consistant à demander le paiement des informations supplémentaires communiquées.

26. Procédé selon la revendication 23, dans lequel les informations supplémentaires communiquées comprennent un dialogue supplémentaire pour un personnage au sein du programme télédiffusé ou du programme vidéo.

27. Procédé selon la revendication 23, comprenant en outre la diffusion d'un programme télévisé incluant une composante audio et une composante vidéo.

28. Procédé selon la revendication 27, dans lequel les informations supplémentaires demandées sont des informations audio en direct.

29. Procédé selon la revendication 27, dans lequel les informations supplémentaires demandées sont préenregistrées sur un support d'enregistrement.

30. Procédé selon la revendication 27, comprenant en outre l'étape consistant à enregistrer sur un support d'enregistrement les informations supplémentaires.

31. Procédé selon la revendication 27, dans lequel l'étape de diffusion consiste en outre à diffuser des informations d'ordre des informations supplémentaires.

32. Procédé selon la revendication 27, dans lequel l'étape de diffusion consiste en outre à diffuser des informations de synchronisation relatives au programme télévisé.

33. Procédé selon la revendication 32, dans lequel l'étape de diffusion des informations de synchronisation consiste en outre à diffuser un code temporel qui est mis à jour à des intervalles prédéterminés et qui est utilisé pour synchroniser les informations supplémentaires sur le programme télévisé diffusé dans ladite étape de transmission.

34. Procédé selon la revendication 32, dans lequel l'étape de réception de la demande d'informations supplémentaires consiste à recevoir les informations de synchronisation du demandeur.

35. Procédé selon la revendication 23, comprenant la synchronisation sur une composante audio au niveau du programme télédiffusé ou vidéo.

36. Procédé selon la revendication 23, dans lequel les informations supplémentaires demandées comprennent des informations audio et visuelles.

37. Procédé selon la revendication 23, comprenant en outre l'étape de fourniture d'informations d'identification de programme avant de traiter la demande.

38. Procédé selon la revendication 23, dans lequel les informations de synchronisation comprennent un code temporel qui est mis à jour à des intervalles prédéterminés.

39. Procédé selon la revendication 23, comprenant en outre les étapes consistant à :
recevoir des demandes additionnelles de changement interactif des informations supplémentaires demandées sur la base du programme vidéo télévisé visualisé ; et
modifier les informations supplémentaires demandées selon les demandes additionnelles.

40. Procédé de réception d'informations supplémentaires, consistant à :
afficher un programme vidéo (1110) incluant une composante audio, une composante visuelle et des informations de synchronisation ; lancer un programme informatique conçu pour traiter une demande d'informations supplémentaires relatives à l'action et aux événements se produisant au sein du programme vidéo ; demander les informations supplémentaires ; transmettre les informations correspondant aux informations de synchronisation à partir du programme vidéo ; recevoir les informations supplémentaires ; et
produire les informations audio supplémentaires demandées, synchronisées sur le programme vidéo selon les informations de synchronisation ; **caractérisé en ce que**
(a) ladite demande est effectuée par un appelant sur un réseau téléphonique,
(b) lesdites informations supplémentaires comprennent des informations audio fournies au demandeur sur ledit réseau téléphonique, et
(c) dans lequel la lecture desdites informations audio sur ledit réseau téléphonique ne chevauche pas le dialogue d'un quelconque personnage au sein du programme vidéo.

41. Procédé selon la revendication 40, le procédé utilisant un dispositif d'affichage (1120) pour afficher le programme vidéo et un appareil de traitement de données incluant une UC (1142) et un dispositif de stockage (1144) connecté de façon opérationnelle à l'UC et contenant un programme conçu pour être exécuté par l'UC pour demander les informations supplémentaires et pour afficher les informations supplémentaires.

42. Procédé selon la revendication 40, dans lequel la composante visuelle du programme vidéo contient des informations d'identification de programme relatives au programme vidéo.

43. Procédé selon la revendication 40, dans lequel la composante visuelle du programme vidéo contient les informations de synchronisation.

44. Procédé selon la revendication 43, dans lequel les informations de synchronisation comprennent un code temporel qui est modifié à des intervalles prédéterminés et qui est utilisé pour synchroniser les informations supplémentaires sur le programme vidéo.

45. Procédé selon la revendication 40, comprenant en outre l'étape consistant à effectuer des demandes additionnelles pour modifier, de manière interactive, les informations supplémentaires demandées.

46. Procédé selon la revendication 40, consistant en outre à recevoir des informations d'identification de programme et des informations de synchronisation relatives au programme vidéo.

47. Procédé selon la revendication 46, dans lequel l'étape de réception d'informations de synchronisation consiste à recevoir un code temporel qui est mis à jour à des intervalles prédéterminés.

48. Procédé selon la revendication 46, incluant en outre l'étape consistant à payer les informations supplémentaires.

49. Procédé selon la revendication 48, dans lequel l'étape de paiement des informations supplémentaires est accomplie par une transaction par carte bancaire.

50. Procédé selon la revendication 48, dans lequel ladite étape de paiement des informations supplémentaires est effectuée par paiement d'un état de services.

51. Procédé selon la revendication 46, comprenant en outre l'étape consistant à effectuer des demandes additionnelles de changement des informations supplémentaires demandées.

52. Procédé selon la revendication 46, comprenant en outre l'étape consistant à lancer un programme d'application informatique pour traiter la demande d'informations supplémentaires effectuée dans ladite étape de demande.
